(19) Europäisches Patentamt
European Patent Office
Office européen des brevets

(11) EP 1 981 024 A1

(12) **EUROPEAN PATENT APPLICATION**
published in accordance with Art. 158(3) EPC

(43) Date of publication:
**15.10.2008 Bulletin 2008/42**

(21) Application number: **07707954.9**

(22) Date of filing: **02.02.2007**

(51) Int Cl.:
***G11B 7/0065*** *(2006.01)* ***G03H 1/26*** *(2006.01)*
***G11B 7/004*** *(2006.01)* ***G11B 7/135*** *(2006.01)*

(86) International application number:
**PCT/JP2007/051805**

(87) International publication number:
**WO 2007/088972 (09.08.2007 Gazette 2007/32)**

(84) Designated Contracting States:
**DE FR GB**

(30) Priority: **03.02.2006 JP 2006027723**

(71) Applicant: **FUJIFILM Corporation**
**Minato-ku**
**Tokyo 106-8620 (JP)**

(72) Inventor: **USAMI, Yoshihisa**
**c/o FUJIFILM Corporation**
**Ashigarakami-gun Kanagawa, 258-8577 (JP)**

(74) Representative: **Grünecker, Kinkeldey,**
**Stockmair & Schwanhäusser**
**Anwaltssozietät**
**Leopoldstrasse 4**
**80802 München (DE)**

(54) **OPTICAL RECORDER/REPRODUCER, OPTICAL RECORDING METHOD, AND OPTICAL REPRODUCING METHOD**

(57) To provide an optical recording/reproducing apparatus, optical recording method and optical reproduction method, which can easily recognize whether or not the surface temperature of an optical recording medium capable of multiplexing recording by collinear holography is outside the allowable use temperature range and thus can achieve excellent reproduction free from displacement or deformation of image. The apparatus performs at least one of recording by application of an information beam and a reference beam to an optical recording medium having a recording layer for recording information by holography, and reproduction of information by application of a reproduction beam, and comprises at least one of: a warning unit configured to inform that, upon recording or reproduction, a surface temperature of the optical recording medium has fallen outside a use-allowable temperature range with respect to a reference temperature; and an aborting unit configured to display the fact that at least one of recording and reproduction will be aborted and abort the recording and reproduction, when the surface temperature has fallen outside a use-limit temperature range with respect to the reference temperature. Moreover, it is preferably an optical recording method or optical reproduction method.

FIG. 1

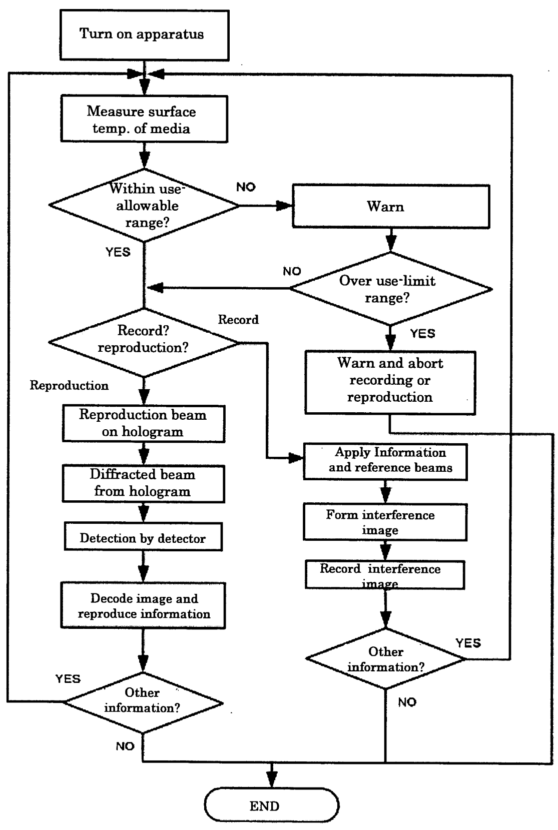


EP 1 981 024 A1

## Description

Technical Field

The present invention relates to an optical recording/reproducing apparatus, optical recording method and optical reproduction method for recording on or reproducing from an optical recording medium having a recording layer for recording information by holography. More particularly, the present invention relates to an optical recording/reproducing apparatus, optical recording method and optical reproduction method, which are capable of normal recording or reproduction within an allowable temperature range of the optical recording medium and of obtaining high signal-to-noise ratios (SNR) upon recording and reproduction.

Background art

A method for recording on an optical recording medium by holography generally utilizes optical interference between an image information-carrying information beam (object beam) and a reference beam inside the medium to produce an interference image (interference fringes), and records it in the medium.

Holographic optical recording that involves application of such information and reference beams with their optical axes matched is referred to as "collinear holography", a recording method known to be less susceptible to variations among optical recording apparatuses and media.

Application of information and reference beams by collinear holography produces interference fringes in the recording layer of an optical recording medium, thereby recording information therein.

Reproduction of the information recorded in the optical recording medium is achieved by application of a reproduction beam, which is identical to the reference beam used for recording, from the same direction as the reference beam. This leads to generation of a diffracted beam from the interference image formed of interference fringes as optical information, and the optical information is reproduced by collecting the diffracted beam.

As a method for increasing the storage capacity of optical recording media, there are proposed multiplexing recording methods for increasing the density of the interference fringes recorded. More specifically, shift-multiplexing recording, angle-multiplexing recording, wavelength-multiplexing recording, and phase-multiplexing recording have been utilized.

Among these recording strategies, the shift-multiplexing recording has high compatibility with conventional CD and DVD recording methods where information is recorded on a spinning disc, and offers high random access performance. This is because in this recording method additional information, or interference image, is placed one after another on the initial recorded information while slightly moving either a beam spot or an optical recording medium along the surface of the recording layer. For this reason, shift-multiplexing recording is employed for the above-mentioned collinear holography where single lens is used for recording (see Non-Patent Literature 1).

As shown in FIG. 3, shift-multiplexing recording by collinear holography is carried out on a beam spot 32 basis, which beam spot has a predetermined size and is produced by focusing an information beam 37 and reference beam 38, which have been passed through an object lens 12, in a recording layer 4 of an optical recording medium 21. When a beam spot 32 has been applied and information is recorded as a page data formed of interference image, the optical recording medium 21 rotates by one pitch, followed by application of another beam spot 32. In this way an beam spot 32 is applied for every one-pitch rotation, whereby page data are sequentially multiplexed.

The optical information recorded in the optical recording medium by shift-multiplexing is reproduced in the manner shown in FIG. 4. A diffracted beam 39 produced by irradiation of a reproduction beam 38a is received by a detector 14 shown in FIG. 2 in units of the beam spot 32, i.e., data page formed of a reproduced interference image 35, followed by reproduction by decoding of the encoded original information contained in the data page (see Patent Literature 1).

In this reproduction method, however, when the incident angle of the reproduction beam 38a has deviated from that of the reference beam for recording or when the focal distance of the reproduction beam 38a in the optical direction has deviated from that of the reference beam as shown in FIGS. 5 and 6, the direction in which the diffracted beam 39 travels tilts from the original vertical direction by, for example, angle $\theta$, leading to generation of a reproduced interference image that is not identical to the true interference image to be detected by the detector and resulting in failure to perform proper reproduction.

This displacement or deviation of the reproduced interference image from the true original interference image 34 to be received by a light receiving part 33 of the detector of FIG. 11 emerges in the following forms: The reproduced interference image 35 shrinks (see FIG. 12); enlarges (see FIG. 13); shifts to the right side (see FIG. 14); shifts to the lower left side (see FIG. 15); shrinks only in lateral direction (see FIG. 16); or becomes deformed (see FIG. 17). This phenomenon occurs not only during reproduction, but during recording. A possible cause of such displacement and deformation is that the optical recording medium undergoes surface temperature changes during recording and reproduction, so that the incident angles and focal distances in the optical direction of the information beam, reference beam and reproduction beam deviate.

In holography recording, this phenomenon frequently occurs particularly in cases where the surface temperature of the optical recording medium upon recording differs from the surface temperature upon reproduction.

For example, when an optical recording medium that has been written at a media surface temperature of 40°C - a temperature exceeding the pre-set use temperature range of 20°C to 30°C - is reproduced at a surface temperature of 50°C, reproduction may fail due to significant influences of the above-noted deviation or deformation. Moreover, reproduction may fail when attempting to reproduce information from an optical recording medium at a surface temperature of 40°C, which optical recording medium has been written at a surface temperature of 25°C, a temperature that falls within the use temperature range.

Accordingly, reproduction failure will not result when the surface temperature of the optical recording medium upon recording is almost the same as the surface temperature upon reproduction.

Usually, the surface temperature of such an optical recording medium upon recording and reproduction is not controlled, and means of recognizing the fact that the above displacement or deformation has been enlarged due to the difference between the surface temperature of optical recording medium upon recording and the surface temperature upon reproduction has not yet been provided. Particularly where an optical recording medium has been written in a state where its surface temperature falls outside the use-allowable temperature range, the above displacement or deformation may occur no matter how normal reproduction is carried out within the use temperature range.

That is, if it is possible to recognize that the surface temperature of the optical recording medium upon recording is outside such an allowable temperature range, recording under such abnormal condition can be stopped.

On the other hand, even when the optical recording medium has been written with the surface temperature falling within the use temperature range, falling outside that use temperature range upon recording similarly leads to displacement or deformation of interference image. In either case, troubles can be avoid by abortion of recording or reproduction, if it is possible to recognize that the surface temperature of the optical recording medium is falling outside the use temperature range.

Thus, the current situation is that an optical recording/reproducing apparatus, optical recording method and optical reproduction method, which can easily recognize whether or not the surface temperature of an optical recording medium capable of multiplexing recording by collinear holography is outside the allowable use temperature range and thus can avoid unnecessary recording and reproduction, have not yet been realized, and therefore, provision of such optical recording/reproducing apparatus, optical recording method and optical reproduction method is demanded.

[Patent Literature 1] Japanese Patent Application Laid-Open (JP-A) No. 2004-177958
[Non-Patent Literature 1] Nikkei Electronics, pp. 105-114, January 17, 2005

Disclosure of Invention

It is an object of the present invention to solve the foregoing problem pertinent in the art and to achieve the following object. More specifically, it is an object of the present invention to provide an optical recording/reproducing apparatus, optical recording method and optical reproduction method, which can easily recognize whether or not the surface temperature of an optical recording medium capable of multiplexing recording by collinear holography is outside the allowable use temperature range and thus can achieve excellent reproduction free from displacement or deformation of image.

Means to solve the foregoing problems are as follows:

<1> An optical recording/reproducing apparatus for performing at least one of recording by application of an information beam and a reference beam to an optical recording medium having a recording layer for recording information by holography, and reproduction of information by application of a reproduction beam, the apparatus including at least one of: a warning unit configured to inform that, upon recording or reproduction, a surface temperature of the optical recording medium has fallen outside a use-allowable temperature range with respect to a reference temperature; and an aborting unit configured to display the fact that at least one of recording and reproduction will be aborted and abort the recording and reproduction, when the surface temperature has fell outside a use-limit temperature range with respect to the reference temperature.

<2> The optical recording/reproducing apparatus according to <1>, wherein the reference temperature is 0°C to 50°C.

<3> The optical recording/reproducing apparatus according to one of <1> and <2>, wherein the use-allowable temperature range is -30°C to 30°C.

<4> The optical recording/reproducing apparatus according to any one of <1> to <3>, wherein the use-allowable temperature range is -5°C to 5°C.

<5> The optical recording/reproducing apparatus according to any one of <1> to <4>, wherein the use-limit temperature range is -40°C to 40°C.

<6> The optical recording/reproducing apparatus according to any one of <1> to <5>, wherein the use-limit temperature range is -10°C to 10°C.

<7> The optical recording/reproducing apparatus according to any one of <1> to <6>, wherein the surface temperature is a temperature of a surface of the optical recording medium, which surface is opposite to an incident side of the information beam, reference beam, and reproduction beam, and the surface temperature is measured with a temperature sensor.

<8> The optical recording/reproducing apparatus according to any one of <1> to <7>, wherein the optical recording medium has a disc shape, angle θ1 formed by a line L1 and line L2 is 10° to 180°, the line L1 passing through the center of a pickup for applying information and reference beams and the center of the optical recording medium, the line L2 passing through the center of the temperature sensor and the center of the optical recording medium, and the temperature sensor is placed inside the edge of the optical recording medium without being in contact with the surface of the optical recording medium.

<9> The optical recording/reproducing apparatus according to any one of <1> to <8>, wherein the optical recording medium has a disc shape, and the difference between a distance d1 from the center of a pickup for applying information and reference beams to the center of the optical recording medium and a distance d2 from the center of the temperature sensor to the center of the optical recording medium is 20 mm or less.

<10> The optical recording/reproducing apparatus according to any one of <1> to <9>, wherein the information beam and reference beam are applied in such a way that the optical axis of the information beam is collinear with the optical axis of the reference beam.

<11> The optical recording/reproducing apparatus according to any one of <1> to <10>, wherein the reproduction beam is applied to an interference image at the same angle as the reference beam used for recording on the optical recording medium, to reproduce recorded information.

<12> The optical recording/reproducing apparatus according to any one of <1> to <11>, wherein the optical recording medium includes, in sequence, a first substrate, the recording layer, a filter layer, and a second substrate.

<13> The optical recording/reproducing apparatus according to <12>, wherein the optical recording medium records therein a reflective hologram.

<14> The optical recording/reproducing apparatus according to one of <12> and <13>, wherein the filter layer includes a coloring material-containing layer containing at least one of a pigment and a dye, and a cholesteric liquid crystal layer on the coloring material-containing layer.

<15> The optical recording/reproducing apparatus according to any one of <12> to <14>, wherein the filter layer includes a coloring material-containing layer containing at least one of a pigment and a dye, and a dielectric material-deposited layer on the coloring material-containing layer.

<16> The optical recording/reproducing apparatus according to any one of <12> to <15>, wherein the filter layer includes a single cholesteric liquid crystal layer.

<17> The optical recording/reproducing apparatus according to any one of <12> to <16>, wherein the filter layer is a laminate consisting of two or more cholesteric liquid crystal layers.

In the optical recording/reproducing apparatus according to <17>, there are two or more cholesteric liquid crystal layers and thus there is no changes in the selective reflection wavelength due to changes in the incident angle, and neither of the information beam, reference beam and reproduction used for recording or reproduction reaches the reflective film. Thus, generation of light diffusion due to diffused reflection on the reflection surface can be avoided. Accordingly, noises that occur due to the diffused light are not superimposed with the reproduced image and thus are not detected by a CMOS sensor or CCD, allowing detection of the reproduced image to an extent that enables error correction. The noise component due to diffused light becomes more problematic as the degree of multiplexing of holograms increases. More specifically, as the degree of multiplexing increases, e.g., to 10 or higher, the diffraction efficiency per hologram significantly decreases. Thus the presence of the noise component due to diffused light makes detection of the reproduced image very difficult. With this configuration, such difficulty can be overcome and unprecedented high-density image recording can be achieved.

<18> The optical recording/reproducing apparatus according to one of <16> and <17>, wherein the selective reflection wavelength region in the cholesteric liquid crystal layer is continuous.

<19> The optical recording/reproducing apparatus according to any one of <16> to <18>, wherein the cholesteric liquid crystal layer contains at least a nematic liquid crystal and a photo-reactive chiral compound.

<20> The optical recording/reproducing apparatus according to any one of <16> to <19>, wherein the cholesteric liquid crystal layer has circular polarization separation characteristics.

<21> The optical recording/reproducing apparatus according to any one of <16> to <20>, wherein the director axis of molecules of the cholesteric liquid crystal layers rotates in the same direction.

<22> The optical recording/reproducing apparatus according to any one of <16> to <21>, wherein the cholesteric liquid crystal layers have different central selective reflection wavelengths.

<23> The optical recording/reproducing apparatus according to any one of <16> to <22>, wherein the selective reflection wavelength ranges of the cholesteric liquid crystal layers cover a wavelength range of 100 nm or more.
<24> The optical recording/reproducing apparatus according to any one of <12> to <23>, wherein the filter layer transmits a first beam and reflects a second beam that is different from the first beam.
<25> The optical recording/reproducing apparatus according to <24>, wherein the wavelength of the first beam is 350 nm to 600 nm, and the wavelength of the second beam is 600 nm to 900 nm.
<26> The optical recording/reproducing apparatus according to any one of <12> to <25>, wherein the filter layer is used as a selective reflection film for optical recording medium that records information by holography.
<27> The optical recording/reproducing apparatus according to any one of <12> to <26>, wherein the filter layer contains a photo-reactive chiral compound, the photo-reactive chiral compound has a chiral site and a photo-reactive group, and the chiral site is at least one compound selected from isosorbide compounds, isomannide compounds and binaphthol compounds.
<28> The optical recording/reproducing apparatus according to <27>, wherein the photo-reactive group undergoes trans to cis isomerzization about the carbon-carbon double bond by irradiation with light.
<29> The optical recording/reproducing apparatus according to any one of <12> to <28>, wherein the second substrate includes a servo pit pattern.
<30> The optical recording/reproducing apparatus according to <29>, wherein a reflective film is provided on a surface of the servo pit pattern.
<31> The optical recording/reproducing apparatus according to <30>, wherein the reflective film is a metal reflective film.
<32> The optical recording/reproducing apparatus according to any one of <12> to <31>, wherein a first gap layer is provided between the filter layer and reflective layer for smoothing a surface of the second substrate.
<33> The optical recording/reproducing apparatus according to any one of <12> to <32>, wherein a second gap layer is provided between the recording layer and filter layer.
<34> The optical recording/reproducing apparatus according to any one of <12> to <33>, wherein the optical recording medium records a reflective hologram.
<35> An optical recording method which records on an optical recording medium having a recording layer for recording by holography by application of an information beam and a reference beam, the method including at least one of: warning that, upon recording, a surface temperature of the optical recording medium has fallen outside a use-allowable temperature range with respect to a reference temperature; and displaying the fact that recording will be aborted and aborting the recording, when the surface temperature has fell outside a use-limit temperature range with respect to the reference temperature.
<36> The optical recording method according to <35>, wherein the reference temperature is 0°C to 50°C.
<37> The optical recording method according to one of <35> and <36>, wherein the use-allowable temperature range is -30°C to 30°C.
<38> The optical recording method according to any one of <35> to <37>, wherein the use-allowable temperature range is -5°C to 5°C.
<39> The optical recording method according to any one of <35> to <38>, wherein the use-limit temperature range is -40°C to 40°C.
<40> The optical recording method according to any one of <35> to <39>, wherein the use-limit temperature range is -10°C to 10°C.
<41> An optical reproducing method which reproduce from an optical recording medium having a recording layer for recording by holography by application of a reproduction beam, the method including at least one of: warning that, upon reproduction, a surface temperature of the optical recording medium has fallen outside a use-allowable temperature range with respect to a reference temperature; and displaying the fact that reproduction will be aborted and aborting the reproduction, when the surface temperature has fell outside a use-limit temperature range with respect to the reference temperature.
<42> The optical recording method according to <41>, wherein the reference temperature is 0°C to 50°C.
<43> The optical recording method according to one of <41> and <42>, wherein the use-allowable temperature range is -30°C to 30°C.
<44> The optical recording method according to any one of <41> to <43>, wherein the use-allowable temperature range is -5°C to 5°C.
<45> The optical recording method according to any one of <41> to <44>, wherein the use-limit temperature range is -40°C to 40°C.
<46> The optical recording method according to any one of <41> to <45>, wherein the use-limit temperature range is -10°C to 10°C.

According to the present invention, it is possible to solve the problems pertinent in the art and to provide an

optical recording/reproducing apparatus, optical recording method and optical reproduction method, which can easily recognize whether or not the surface temperature of an optical recording medium capable of multiplexing recording by collinear holography is outside the allowable use temperature range and thus can achieve excellent reproduction free from displacement or deformation of image.

Brief Description of the Drawings

FIG. 1 is a flowchart of an optical reproduction method of the present invention.
FIG. 2 is an explanatory illustration of an example of an optical system around an optical recording medium according to the present invention.
FIG. 3 is a conceptual illustration for recording on a recording layer by irradiating an optical recording medium with information and reference beams.
FIG. 4 is an explanatory illustration showing the optical path of a reproduction beam incident to an optical recording medium and the optical path of a diffracted beam produced from an interference image.
FIG. 5 is an explanatory illustration showing the optical path of a reproduction beam incident to an optical recording medium and the optical path of a diffracted beam produced from an interference image.
FIG. 6 is an explanatory illustration showing the optical path of a reproduction beam incident to an optical recording medium and the optical path of a diffracted beam produced from an interference image.
FIG. 7 shows an example of a warning display regarding the surface temperature of an optical recording medium upon reproduction.
FIG. 8 shows an example of a warning display regarding the surface temperature of an optical recording medium upon recording.
FIG. 9 is a perspective view showing the positions of a pickup and temperature sensor with respect to an optical recording medium.
FIG. 10 is a plan view showing the positions of a pickup and temperature sensor with respect to an optical recording medium.
FIG. 11 is an explanatory illustration of an interference image in a light receiving part of an optical detector according to the present invention.
FIG. 12 is an explanatory illustration of an interference image in a light receiving part of an optical detector according to the present invention.
FIG. 13 is an explanatory illustration of an interference image in a light receiving part of an optical detector according to the present invention.
FIG. 14 is an explanatory illustration of an interference image in a light receiving part of an optical detector according to the present invention.
FIG. 15 is an explanatory illustration of an interference image in a light receiving part of an optical detector according to the present invention.
FIG. 16 is an explanatory illustration of an interference image in a light receiving part of an optical detector according to the present invention.
FIG. 17 is an explanatory illustration of an interference image in a light receiving part of an optical detector according to the present invention.
FIG. 18 is a perspective view showing an example of an optical recording medium used in an optical reproduction method of the present invention.
FIG. 19 is an exploded perspective view showing a laminate of an example of an optical recording medium used in an optical reproduction method of the present invention.
FIG. 20 is a perspective view showing an example of an optical recording medium used in an optical reproduction method of the present invention.
FIG. 21 is a perspective view showing an example of an optical recording medium used in an optical reproduction method of the present invention.
FIG. 22 is a graph showing optical characteristics of a filter layer of an optical recording medium used in an optical reproduction method of the present invention.
FIG. 23 is a graph showing optical characteristics of a filter layer of an optical recording medium used in an optical reproduction method of the present invention.
FIG. 24 is a block diagram showing an example of the entire configuration of an optical recording/reproducing apparatus of the present invention.
FIG. 25 is a block diagram showing an example of an arithmetic processing unit according to the present invention.

Best Mode for Carrying Out the Invention

(Optical recording/reproducing apparatus)

An optical recording/reproducing apparatus of the present invention performing at least one of recording by application of an information beam and a reference beam to an optical recording medium having a recording layer for recording information by holography, and reproduction of information by application of a reproduction beam, the apparatus including at least one of: a warning unit configured to inform that, upon recording or reproduction, a surface temperature of the optical recording medium has fallen outside a use-allowable temperature range with respect to a reference temperature; and an aborting unit configured to display the fact that at least one of recording and reproduction will be aborted and abort the recording and reproduction, when the surface temperature has fell outside a use-limit temperature range with respect to the reference temperature. Where necessary, the optical recording/reproducing apparatus of the present invention includes additional unit(s) appropriately selected.

It is only necessary to provide either the warning unit or aborting unit; however, it is preferable provide both of them.

The preferable temperature at which information is recorded on or reproduced from the optical recording medium, i.e., a reference temperature, is preferably 0°C to 50°C, more preferably 10°C to 40°C.

If the reference temperature is below 0°C, water contents in the record layer become icy so that it may result in significant changes in the characteristics of the recording layer. If the reference temperature is above 50°C, it may result in failure to achieve normal recording due to enlargement of the recording layer material.

A use-allowable temperature range with respect to the reference temperature is preferably -30°C to 30°C, more preferably -5°C to 5°C.

If the use-allowable temperature range falls outside the range of from -30°C to 30°C, it may result in significant changes in signal characteristics because of volume changes of the recording layer material, substrate, and other members due to thermal expansion.

It is preferable that a use-limit temperature range with respect to the reference temperature be set wider than the above preferable temperature range; it is preferably -40°C to 40°C, more preferably -10°C to 10°C.

If the use-allowable temperature ranges falls outside the temperature range of from -40°C to 40°C, the recording layer material, substrate, and other members may be softened and thereby the optical recording medium may become deformed.

The optical recording/reproducing apparatus of the present invention is preferably used in an optical recording or reproducing method using so-called collinear holography, wherein the information and reference beams are applied in such a way that the optical axis of the information beam is collinear with that of the reference beam.

Hereinafter, description will be mainly given to collinear holography. However, the present invention is not specifically limited to collinear holography; an optical recording/reproducing apparatus, optical recording method and optical reproduction method of the present invention can also be applied to optical recording method and optical reproduction method using two-beam interferometry.

Through the description of an optical recording/reproducing apparatus of the present invention, an optical recording method and optical reproduction method of the present invention will be described.

<Warning unit>

The warning unit is configured to display warning on a display of the optical recording/reproducing apparatus, when the measured surface temperature of an optical recording medium that has been inserted in the apparatus for either recording or reproduction of information has fallen outside a use-allowable temperature range with respect to a reference temperature. Preferably, the warning unit is a means of displaying warning on the display of the optical recording/reproducing apparatus when the surface temperature of the optical recording medium ha fallen outside the range of ±30°C of the reference temperature. More preferably, the warning unit is a means of displaying warning on the display of the optical recording/reproducing apparatus when the surface temperature of the optical recording medium has fallen outside the range of ±5°C of the reference temperature

The display of warning is not particularly limited and can be appropriately selected depending on the intended purpose. For example, a message such as "ABNORMAL SURFACE TEMPERATURE", "SURFACE TEMPERATURE EXCEEDS USE-ALLOWABLE TEMPERATURE RANGE", "SURFACE TEMPERATURE EXCEEDS USE-ALLOWABLE TEMPERATURE RANGE (-30°C TO 30°C)", or "FAILURE TO RETAIN RECORDED INFORMATION", may be displayed, or an audio display stating the above may be given. Alternatively, warning may be given by a warning lamp or by illumination of LED.

By warning that the surface temperature of the optical recording medium has fallen outside the use-allowable temperature in the optical recording/reproducing apparatus of the present invention, it is possible to inform the user of

possible reduction in recording or reproduction quality.

<Aborting unit>

The aborting unit is configured to display inability of recording or reproduction of information on the display of the optical recording/reproducing apparatus and abort either recording or reproduction, when the measured surface temperature of an optical recording medium inserted in the apparatus for either recording or reproduction of information has fallen outside the use-limit temperature range with respect to the reference temperature. Preferably, the aborting unit is a means of displaying inability of recording or reproduction of information on the display of the optical recording/reproducing apparatus and abort either recording or reproduction, when the surface temperature of the optical recording medium has fallen outside the range of ±40°C of the reference temperature. More preferably, the aborting unit is a means of displaying inability of recording or reproduction of information on the display of the optical recording/reproducing apparatus and abort either recording or reproduction, when the surface temperature of the optical recording medium has fallen outside the range of ±10°C of the reference temperature.

Here, the use-limit temperature range is preferably broader than the use-allowable temperature range specified for the warning unit and does not overlap the use-allowable temperature range. This is because if overlapping exists, the overlapped range corresponds to both warning and aborting and thus it becomes impossible to determine which unit should be activated.

For this reason, the use-limit temperature range for the aborting unit is specified so as not to overlap the use-allowable temperature range for the warning unit. This is because overlapping of these temperature ranges results in a possibility that any of the warning unit and aborting would be activated, requiring additional conditions and complicating the procedure.

The display of abortion is not particularly limited and can be appropriately selected depending on the intended purpose. For example, a message such as "ABNORMAL SURFACE TEMPERATURE, RECORDING (REPRODUCATION) WILL BE ABORTED", "SURFACE TEMPERATURE EXCEEDS USE-LIMIT TEMPERATURE RANGE, RECORDING (REPRODUCATION) WILL BE ABORTED", "SURFACE TEMPERATURE EXCEEDS USE-LIMIT TEMPERATURE RANGE (-40°C TO 40°C), OPERATION WILL BE ABORTED BECAUSE GOOD RECORDING (REPRODUCTION) WOULD FAIL", or "FAILURE TO RETAIN RECORDED INFORMATION", may be displayed, or an audio display stating the above may be given. Alternatively, abortion of recording (reproduction) may be indicated by a lamp or illumination of LED.

By aborting recording or reproduction in this way, it is possible to surely inform the user of possible reduction in recording and reproduction quality.

The method of abortion is not particularly limited and can be appropriately selected depending on the intended purpose; for example, application of at least one of an information beam, reference beam and reproduction is stopped until the surface temperature of the optical recording medium temporarily drops back to a temperature within the use-limit temperature range, preferably within the use-allowable temperature range.

A specific procedure will be described. As shown in the flowchart of FIG. 1, turning on the power to the optical recording/reproducing apparatus activates a temperature sensor positioned close to, but not contacting a surface of an optical recording medium inserted in the optical recording/reproducing apparatus, and the temperature sensor measure the surface temperature of the optical recording medium. The waning unit then determines whether the measured surface temperature falls within a use-allowable temperature range with respect to a reference temperature. If the surface temperature is determined to fall within the use-allowable temperature range, when recording, information and reference beams are applied to the optical recording medium to form and record interference images in the recording layer; when reproduction, a reproduction beam is applied to a hologram recorded in the optical recording medium to produce a diffracted beam from the hologram, and the diffracted beam is received by a detector for decoding of image data to reproduce recorded information.

The waning unit displays a warning on the display if it has been determined that the surface temperature falls outside the use-allowable temperature range. Furthermore, if it has been determined that the surface temperature falls outside the use-limit temperature range, the aborting unit displays this fact and aborts recording or reproduction.

It should be particularly noted that if the optical recording medium has been written in a state where its surface temperature falls outside the use-allowable temperature range or use-limit temperature range, displacement or deformation of the reproduced interference image may occur no matter how normally reproduction is carried out within the use-allowable temperature range. Thus, errors and noises will be generated.

If it is possible to recognize upon recording that the surface temperature of the optical recording medium is outside such a use-allowable temperature range or use-limit temperature range, recording under such abnormal condition can be stopped.

On the other hand, even when the optical recording medium has been written with the surface temperature falling within the use-allowable temperature range, falling outside the use-allowable temperature range or use-limit

temperature range upon recording similarly leads to displacement or deformation of interference image.

In either case, waning is given if the surface temperature of the optical recording medium is determined to be outside the use-allowable temperature range, and in addition, recording or reproduction is aborted if the surface temperature is determined to be outside the use-limit temperature range. Thus, it is possible to avoid reproduction failure and reduction in recording or reproduction quality.

-Temperature sensor-

The temperature sensor is not particularly limited and can be appropriately selected depending on the intended purpose; examples thereof include non-contact radiation thermometers, contact thermometers, and atmospheric thermometers.

The position of the temperature sensor with respect to an optical recording medium is not particularly limited and can be appropriately set depending on the intended purpose. For example, the arrangement shown in FIGS. 9 and 10 can be employed, wherein the optical recording medium has a disc shape; the angle θ1 formed by a line L1 and line L2 is 10° to 180°, the line L1 passing through the center of the pickup for applying information and reference beams and the center of the optical recording medium, the line L2 passing through the center of the temperature sensor and the center of the optical recording medium; and the temperature sensor is placed inside the edge of the optical recording medium without being in contact with the surface of the optical recording medium.

The angle θ1 is more preferably 30° to 180°, most preferably 60° to 180°. If the angle θ1 is less than 10°, the temperature may not be measured with accuracy due to influences of recording beams.

Moreover, the difference between a distance d1 from the center of the pickup for applying information and reference beams to the center of the optical recording medium and a distance d2 from the center of the temperature sensor to the center of the optical recording medium is preferably 20 mm or less, more preferably 10 mm or less, further preferably 5 mm or less. If the distance difference between d1 and d2 is greater than 20 mm, the temperature sensor measures a temperature that is far from the actual recording layer temperature, and thus temperature control may not be properly carried out.

When the pickup moves in radial directions of the optical recording medium according to the position of track to which recording or reproduction is carried out, the temperature sensor may be so configured that it is movable in radial directions of the optical recording medium according to the movement of the pickup so that the difference between d1 and d2 falls within the above ranges. Moreover, the position of the temperature sensor may be fixed such that the difference between d1 and d2 falls within the above ranges no matter where the pickup moves over the optical recording medium.

The distance between the temperature sensor and surface of the optical recording medium is preferably 0.5 mm to 50 mm, more preferably 1 mm to 20 mm. If the distance is less than 0.5 mm, the temperature sensor may contact the surface of the optical recording medium and thus normal rotation of the optical recording medium may not be obtained. If the distance is greater than 50 mm, the surface temperature of the optical recording medium may not be measured with accuracy.

The number of the temperature sensor to be provided is not particularly limited as long as at least one temperature sensor is provided, and can be appropriately determined depending on the intended purpose; for example, 2-5 temperature sensors may be provided. Although more accurate surface temperature can be obtained using multiple temperature sensors, the process of adding and averaging the measured surface temperature values may become complicated.

-Display-

The display is provided at a prominent portion (e.g., operation unit) of the optical recording/reproducing apparatus of the present invention, and displays thereon warning or abortion.

The display is not particularly limited and can be appropriately selected according to the intended purpose; examples are messages shown in FIGS. 7 and 8, image display, audio display, and vibration display. An example of method of image display or message display is display on liquid crystal display, LED or indication lamp. An example of method of audio display is playback of recorded voice or beeping of a buzzer. An example of method of vibration display is vibration of operation buttons.

<Additional unit>

The additional unit is not particularly limited and can be appropriately selected depending on the intended purpose; examples include a cooling unit and a heating unit for cooling or heating the optical recording medium, and a focusing and tracking servo unit for controlling the incident angle of information and reference beams or reproduction

beam.

-Cooling unit-

The cooling unit is not particularly limited and can be appropriately selected depending on the intended purpose. Examples of cooling method are cooling by means of a Peltier cooler having a Peltier device incorporated therein that utilizes Peltier effect, a phenomenon where when current is allowed to pass through the junction of two different metals, heat moves from one metal to the other metal; cooling by feeding air from the outside; and cooling by means of a heat pipe. Among them. cooling by means of a Peltier cooler is preferable because of easy temperature control.

-Heating unit-

The heating unit is not particularly limited and can be appropriately selected depending on the intended purpose. For example, non-contact heaters using electromagnetic waves such as light or RF are preferable; specific examples thereof include optical lamps such as infrared heaters and halogen lamps (those where wavelengths sensitive to optical recording media are removed) , hot plates, cable heaters, cartridge heaters, multi-cell heaters, thick-film heaters, and flexible heaters. Among them, infrared heaters and halogen lamps are preferable.

-Focusing and tracking servo unit-

The focusing and tracking servo unit is not particularly limited and can be appropriately selected depending on the intended purpose. For example, a controlling unit for detecting information regarding deformation (e.g., displacement of the reproduced interference image) and performing focusing and tracking based on the deformation information can be employed.

-Detection of deformation information-

The method of detection of deformation information is not particularly limited and can be appropriately selected depending on the intended purpose. For example, the following method can be employed: Using a true interference image as a reference, a value is calculated that minimizes the solution to a given calculating formula, as well as displacement amounts in X direction and Y direction in the light receiving part that received a diffracted beam. As a method of finding a minimum value, for example, successive calculation, partial differentiation, or nonlinear least squares method can be employed.

More specifically, for example, it is assumed that the density information of a pixel is defined as D (x, y), and the density information of the true interference image and density information of the reproduced interference image are defined as Do (x, y) and $D_R$ (x, y), respectively.

In the case of a 8-bit sensor, the level of the pixel density is expressed by a value of 0 to 255. For simple calculation, it is preferable to specify a threshold level and assign 0 or 1 according to the measured level.

The coordinates x and y represent a longitudinal coordinate and a lateral coordinate, respectively, in a two-dimensional sensor (diffracted beam-receiving part of the detector). For example, in the case of a 1,024 × 768 two-dimensional sensor, the coordinate x assumes a value ranging from 1 to 1,024, and the coordinate y assumes a value ranging from 1 to 768. In the case of a $X_{max} \times Y_{max}$ two-dimensional sensor, the coordinate x assumes a value ranging from 1 to $X_{max}$, and the coordinate y assumes a value ranging from 1 to $Y_{max}$.

If it is assumed that the displacement amount and magnification of the reproduced interference image with respect to the true interference image are represented by Δx and Δy, and α, respectively, the following equation holds ideally:

$$\alpha \times D_R (x - \Delta x, y - \Delta y) = D_0 (x, y)$$

To find the displacement amount, Δx and Δy, of the reproduced interference image, the following equation is solved so that the value of K is minimized:

$$K = \Sigma\Sigma[D_0 (x, y) - \alpha \times D_R (x - \Delta x, y - \Delta y)]^2$$

Note, however, that if (x -$\Delta$x) or (y-$\Delta$y) is less than 1 or if (x -$\Delta$x) is greater than $x_{max}$ or (y-$\Delta$y) is greater than $y_{max}$, it is preferable to find a minimum K value without summation.

The method of finding the minimum value is, for example, the following successive calculation, partial differentiation, or non-linear least squares method.

--Successive calculation--

Successive calculation finds values of K for each set of various values of $\Delta$x, $\Delta$y and $\alpha$ varied within given ranges, and values of $\Delta$x, $\Delta$y and $\alpha$ that gave a minimum K value is employed as the most promising values. This method takes a relatively long time for calculation, but can find a minimum value without fail.

--Partial differentiation-

Partial differentiation is a method of partially differentiating the above equation for finding K with respect to each of $\Delta$x and $\Delta$y, and then find a minimum K value by simultaneously solving the obtained derivatives.

This method can shorten the calculation time, but sometimes a solution cannot be found or multiple solutions are found. For this reason, it is preferable to use this method only in cases where the degree of deformation is small.

--Nonlinear least squares method-

The nonlinear least squares method is a method of determining a unknown parameter so as to minimize the sum of squares of residuals between the measured values and calculated values. In this method the sum of squares of residuals are calculated for sets of given structural parameter, sets of structural parameter that give a negative derivative of the sum of squares of residuals are generated, and the sum of squares of residuals for those values is calculated. By repeating this calculation a minimum value for the sum of squares of residuals is found. For example, the steepest descent method, Gauss-Newton method, or modified Marquardt method can be employed.

The steepest descent method is a method of searching for a solution in a direction in which reduction in the sum of squares of residuals is locally maximized; the convergence region around the local minimum point is relatively large, however, the convergence speed may decrease in some cases.

The Gauss-Newton method is a method of repeatedly improving solutions using approximation on the assumption that the least squares problem to be solved is close to linearity; the method converges fast if the presumed initial value is close to the solution, however, the convergence region is generally large.

The modified Marquardt method is a compromise between the steepest descent method and the Gauss-Newton method. In this method assumption based on the steepest descent method is made when the presumed variables are far from the solution and influences of non-linearity is large, and assumption based on the Gauss-Newton method is made when the variables become close to the solution. In this way the solution can be obtained stably with less repetition.

The above calculations are made on the assumption that displacement in x direction, displacement in y direction, magnification, and shrinkage occur by the same amounts. However, in actual situations, the displacement amount may vary partially. In such a case $\Delta$x, $\Delta$y and $\alpha$ become a function of x and y and thereby the equation may become complicated. If the equation has become complicated, it can be solved by successive calculation; however, it is preferable to solve the equation using non-linear least squares method in order to shorten the calculating time.

To find $\Sigma$ in the above formula it is possible to sum up values within a limited range, e.g., from (1/4)$x_{max}$ to (3/4) $x_{max}$, rather than all values from 1 to max. This reduces the number of calculation steps and thus advantageously facilitates calculation. Moreover, since no calculations are carried out for end regions of the image data in this case, adverse influences never arise from non-pixel portions of the data end regions.

The target from which deformation information is retrieved is not particularly limited and can be appropriately determined depending on the intended purpose. For example, the intensity (W/$cm^2$) of diffracted beam, signal-to-noise ratio (SNR), or error count of reproduced signal, can be targeted.

The method of retrieval of deformation information based on the intensity (W/$cm^2$) of diffracted beam is not particularly limited and can be appropriately determined depending on the intended purpose. For example, a detection method using a photodiode, CCD, or CMOS can be employed.

More specifically, in a retrieval method using a photodiode, an optical branching mirror is placed at a portion of the optical path, and a branched light beam from the optical branching mirror is incident to the photodiode, whereby the intensity of the diffracted beam can be measured.

Deformation information is retrieved on the basis of the intensity distribution of the diffracted beam.

Another example of the retrieval method is a method that involves calculation from image data. More specifically, the light intensity distribution on an image data-detecting device is determined by calculation of the image data, and displacement amount is measured based on the light intensity distribution. Deformation information is retrieved based

on the position of the peak value in the determined light intensity distribution.

Among other retrieval methods based on the intensity of the diffracted beam, a method involving calculation from image data is preferable in view of simplicity of equipment.

The retrieval method based on SNR is not particularly limited and can be appropriately determined depending on the intended purpose. For example, a retrieval method involving calculation from image data, or a retrieval method using a SNR detector can be employed.

In the retrieval method using a SNR detector, deformation information can be retrieved as follows: A criteria value to determine whether image data is bright or dark is specified, the criteria value and image data are compared for calculation of signal amount and noise amount, thereby retrieving deformation information on the basis of the ratio of Signal amount to noise amount.

Among other retrieval methods based on SNR, a method involving calculation from image data is preferable in view of simplicity of equipment.

The retrieval method based on error count of reproduced signal is not particularly limited and can be appropriately determined depending on the intended purpose. For example, a method involving calculation from image data can be employed.

More specifically, deformation information can be retrieved by decoding image data and calculating the error count upon decoding.

-Detection of displacement or the like of reproduced interference image and calculation of correction amount-

The method of detection of displacement or the like of reproduced interference image is not particularly limited and can be appropriately selected depending on the intended purpose.

For example, it can be expressed in terms of positional displacements of reproduced interference image, with the longitudinal axis, lateral axis, and vertical axis with respect to the surface of the light receiving part of the detector being X axis, Y axis, and Z axis. For example, the positional displacement amount can be expressed as displacements in (X-axis direction, Y-axis direction, Z-axis direction), e.g., (-0.5 bit, 0.3 bit, -0.2 bit), (-5 nm, 3 nm, -0.2 nm), etc..

Alternatively, displacement can be expressed in terms of angular changes as angle θ (rad), as measured when the interference image appeared rotated about Z axis from y axis by, for example, 0.5°. However, this displacement can also be expressed in terms of displacements in x-axis direction and y-axis direction in the diffracted beam receiving part. Thus, there is no specific reason to detect displacements in terms of angular changes.

Furthermore, alternatively, displacement can be expressed in terms of reduction ratio or expansion ratio of interference image. For example, suppose that the area of a true interference image is 100, reduction or increase in the area of a reproduced interference image with respect to the area of the true interference image can be expressed in terms of reduction ratio or expansion ratio, e.g., -10% (reduction ratio). Also, as the reduction ratio or expansion ratio supposing that the area of the true interference image is 1, for example, reduction ratio can be expressed as 0.1, for example.

-Method of correcting the incident direction of reproduction beam-

The method of correcting the incident direction of the reproduction beam is not particularly limited and can be appropriately determined depending on the intended purpose. For example, a method of correcting at least one of focusing and tracking of the reproduction beam based on the measured displacement amount can be employed.

The method of controlling focusing or tracking involves, for example, capturing of the image data of the reproduced interference image, detected by the diffracted beam-receiving part, in an image sensor 71 and further in a central processing unit (CPU) 73, as shown in FIG. 25.

The image data of the true interference image is stored in a memory 74 and, where necessary, read into the CPU 73.

Calculations are conducted by the CPU 73 on the basis of the read image data of the reproduced interference image and true interference image, to determine the displacement amount, expansion ratio, or reduction ratio of the reproduced interference image with respect to the true interference image.

A focusing and tracking circuit 72 performs tracking control on the basis of the measured displacement amount, and performs focusing control on the basis of reduction ratio or expansion ratio. Correction based on expansion ratio (or reduction ratio) is preferably achieved by controlling the position of a focusing lens in the depth direction of the optical path of the reference beam. Other than the controlling method where the depth-direction of the focusing lens is controlled, a controlling method is preferable that alters the expansion ratio of an optical system for reproduction beam; for example, a controlling method is more preferable where an expander is placed in the optical path of reproduction beam so as to control the expansion ratio of the reproduction beam.

The image data of the true interference image may be of either (1) fixed pattern common to any hardware

(optical recording/reproduction apparatus) or (2) unique pattern for each disc (optical recording medium).

In the case of (1), it is preferable to record image data in the ROM of hardware in advance.

In the case of (2), it is preferable to record image data by means other than holograms (interference images). For example, it is preferable to apply radio frequency identification (RFID), which enables close, contact-free reading and writing of semiconductor memory data by induction field or radio waves , to a disc or cartridge. Alternatively, a recording layer that does not use holography (e.g., a recording layer of DVD-R) may be provided in a disc, and image data is recorded therein in advance.

As a method of correcting temperature changes, it is also possible to alter the wavelength of laser beam. Correction of temperature change is preferably performed in parallel with controlling of focusing and tracking.

The method altering the wavelength of laser beam is, for example, controlling of laser temperature.

--Focusing control--

Focusing controlling is not particularly limited and can be appropriately selected depending on the intended purpose. For example, a focal distance to be adjusted is calculated based on the displacement amount obtained by measuring the foregoing displacements in x-axis direction, y-axis direction and z-axis direction, angle θ, reduction ratio, expansion ratio, etc., and move the focus point by the obtained amount. As a method of measuring the movement amount for finely adjusting the movement amount upon focus point movement, for example, controlling by means of focus detection using the astigmatism method, Foucault method, or Critical angle method (see "Illustrative Compact Disc Handbook (Zukai Compact Disc Tokuhon)" by Hirataro Nakajima and Hiroshi Ogawa, Ohmsha Publishing, the first edition, November 10, 1986) can be employed.

-Astigmatism method-

With the astigmatism method, derivation between the reproduction position in the recording layer of an optical recording medium and the focus point of the reproduction beam is detected. Namely, it detects the deviation between the focal distance, i.e. the distance between the center of the object lens and the focus point of the reproduction beam, and the distance from the center of the object lens to the recording location in the recording layer. In the astigmatism method, a beam splitter or the like is arranged between the light source and the object lens on a light path wherein the light is emitted from the light source, transmitted through the object lens and applied to the optical recording medium. The reflected beam is split by means of the beam splitter, and transmitted through a cylindrical lens to focus an image. In the case where the focused image is circle, it is detected that the focal distance is matched. In the case where the focused image is a vertically-long oval, it is detected that the optical recording medium is positioned too close relative to the object lens. In the case where the focused image is horizontally-long oval, it is detected the optical recording medium is positioned to far relative to the object lens.

The detection is performed by splitting the reflective beam into four, and comparing the shapes of the images in the diagonal regions.

-Foucault method-

The Foucault method is identical in configuration to the astigmatism method in that it provides a beam splitter for collection of the reflected beam and allows the reflected beam to pass through the cylindrical lens. In the Foucault method, a prism is arranged at a place where the reflected beam transmitted through the cylindrical lens is focused to form an image. In the case where the image is focused at the apex angle of the prism, it is detected that the focal distance is matched. In the case where the image is focused over the apex angle, it is detected that the optical recording medium is positioned too close relative to the object lens. In the case where the image is focused before the apex angle, it is detected that the optical recording medium is positioned too far relative to the object lens. The focusing point of the image is detected by splitting the reflected beam into two, allocating a sensor for each beam, and measuring the intensity of each beam.

-Critical angle method-

With the critical angle method, deviation is detected between a reproduction position in the recording layer of an optical recording medium and the focus point of a reproduction beam. Namely, it detects the deviation between the focal distance, i.e. the distance between the center of the object lens and the focus point of reproduction beam, and the distance from the center of the object lens to the recording position in the recording layer. In the critical angle method, a prism is arranged in between the light source and the object lens on the light path wherein the light is emitted from the light source, passed through the object lens and applied to the optical recording medium. Here, the prism is disposed

in a manner such that an incident angle of a ray of the center of incident light flux becomes a critical angle (an angle where the incident light is totally reflected at the surface of the prism). The focus point is detected by leading the reflected beam from the prism, and detecting the brightness of the reflected beam. In the case where the optical recording medium is positioned too close or far relative to the object lens, the quantity of the light reflected from the prism is reduced. By using this tendency, the focus point can be detected by judging the distance (close or far) with the polarity of positive and negative (+ and -).

-Tracking control-

Tracking controlling is not particularly limited and can be appropriately selected depending on the intended purpose. For example, off-track displacement amount to be corrected is calculated based on the displacement amount obtained by measuring the foregoing displacements in x-axis direction, y-axis direction and z-axis direction, angle θ, reduction ratio, expansion ratio, etc., and move the irradiation point by the obtained amount. As the method of measuring the movement amount for finely adjusting the movement amount upon the irradiation point movement is, for example, tracking control that can be achieved by detection of the track position by means of three-beam method, push-pull method, or differential phase detection (DPD) method (see "Illustrative Compact Disc Handbook (Zukai Compact Disc Tokuhon)" by Hirataro Nakajima and Hiroshi Ogawa , Ohmsha Publishing, the first edition, November 10, 1986) can be employed.

-Three-beam method-

The three-beam method is a method which detects deviation of the irradiation point of a servo beam from a track on an optical recording medium. In the three-beam method, three beams including a substantially circular main beam, secondary beam A, and secondary beam B are used. The secondary beam A, the main beam, and the secondary beam B are equally spaced, and linearly arranged in this order. The main beam is disposed in a position where the center of the circle of the irradiated main beam is located in the middle of the width of the track. The secondary beam A is disposed in a position where the bottom of the circle of the irradiated secondary beam A contacts with the edge of the width of the track. The secondary beam B is disposed in a position where the top of the circle of the irradiated secondary beam B contacts with the edge of the width of the track.

When these beams are applied to the track in such arrangement, a weak reflected beam is reflected from the track surface, and the strong reflected beam is reflected from other than the track surface. By detecting the intensity of each of the reflected beams, it is possible to detect deviation between the irradiation points of the three beams and the track position.

-Push-pull method-

The push-pull method is a method which detects deviation between the position of the applied servo beam and track in an optical recording medium. In the push-pull method, one beam is applied on the track, and the deviation is detected by a half-split beam detector. The half-split beam detector detects the reflected beam by splitting the reflected beam into two parts. In the case where the beam is applied on the center of the track width, the intensity of each light split into the left part and the right part is detected as equal. In the case where the beam is applied to either sides of the track width, the intensity of the reflected beams are detected as weak at the track surface, but detected as strong at other than the track surface. The intensity of each beam split into the left part and the right part is therefore detected as asymmetrically distributed.

-DPD method-

The DPD (Differential phase detection) method is a method which detects a deviation between the position of applied servo beam and a track formed in the subjective optical recording medium. In the DPD method, a quarter-split beam detector is used. The quarter-split beam detector is further split the beam as of the half-split beam detector used in the push-pull method. In the case where the beam is applied on the center of the track width, the intensity of the right part and the left part of the quarterly split light split into the four regions is detected as equal. In the case where the beam is applied to either sides of the track width, the intensity of the reflected beams are detected as weak at the track, but detected as strong at other than the track. The intensity of each quarterly split beam is detected as asymmetry with the left part and the right part by detecting the intensity distributions of a pair of the diagonally positioned regions within the quarterly split regions.

Means of tracking or focusing controlling is not particularly limited and can be appropriately selected depending on the intended purpose. For example, a servo mechanism can be employed.

Such a servo mechanism is not particularly limited and can be appropriately selected depending on the intended purpose. For example, a mechanism can be employed where the above movement amount is generated as a focus error signal, the focus error signal is amplified in a phase compensation drive amplifier, and a drive device is driven to move the position of the object lens for controlling the focal distance.
The drive device is not particularly limited and can be appropriately selected depending on the intended purpose. For example, an actuator or stepping motor can be employed.

<Specific example of optical recording/reproducing apparatus>

The optical recording/reproducing apparatus performs an optical recording method and optical reproduction method on an optical recording medium for recording or reproduction of information.
The specific example of the optical recording/reproducing apparatus used in the optical recording method and optical reproduction method is described with reference to FIG. 24.
FIG. 24 shows the overall configuration of an optical recording/reproducing apparatus according to the present invention. Note that the optical recording/reproducing apparatus includes an optical recording device and an optical reproducing device, whereby information can be recorded on or reproduced from an optical recording medium.
The optical recording/reproducing apparatus 100 includes a spindle 81 to which an optical recording medium 21 is attached, a spindle motor 82 for spinning the spindle 81, and a spindle servo circuit 83 for controlling the spindle motor 82 so that the rotational speed of the optical recording medium 21 is constant at a predetermined level.
In addition, the optical recording/reproducing apparatus 100 includes a pickup 31 which applies an information beam and a recording reference beam onto the optical recording medium 21 and which applies a reproduction reference beam onto the optical recording medium 21 to detect a reproduction beam for the reproduction of information recorded in the optical recording medium 21, and a drive device 84 that enables the pickup 31 to move in the radial direction of the optical recording medium 21.
The optical recording/reproducing apparatus 100 further includes a temperature sensor 93 placed in the vicinity of the optical recording medium 21, and a display 92 for displaying thereon a warning on the basis of the temperature measured by the temperature sensor 93. Furthermore, the optical recording/reproducing apparatus 100 includes an aborting unit for aborting recording or reproduction if it has been determined that the measured temperature falls outside a predetermined temperature range.
The optical recording/reproducing apparatus 100 includes a detection circuit 85 for detecting a focus error signal FE, a tracking error signal TE and a reproduction signal RF from the output signal of the pickup 31, a focus servo circuit 86 for performing a focus servo operation by driving an actuator inside the pickup 31 on the basis of the focus error signal FE detected by the detection circuit 85 to move an object lens (not shown) in the thickness direction of the optical recording medium 21, a tracking servo circuit 87 for performing a tracking servo operation by driving an actuator inside the pickup 31 on the basis of the tracking error signal TE detected by the detection circuit 85 to move the object lens in the radial direction of the optical recording medium 21, and a slide servo circuit 88 for performing a slide servo operation by controlling the drive device 84 on the basis of a tracking error signal TE and commands from a controller to be described later to move the pickup 31 in the radial direction of the optical recording medium 21.
Furthermore, the optical recording/reproducing apparatus 100 includes a signal processing circuit 89 which creates a reference clock and distinguishes individual addresses on the basis of a reproduction signal RF from the detection circuit 85 and data correction circuit (not shown) for correcting the above-mentioned deformation amount by decoding output data of a CMOS or CCD array (to be described later) in the pickup 31 so that data recorded on the data area of the optical recording medium 21 is reproduced, a controller 90 for controlling overall of the optical recording apparatus 100, and a operation unit 91 for giving a variety of commands to the controller 90.
The controller 90 receives the reference clock and address information outputted from the signal processing circuit 89 and controls, for example, the pickup 31, spindle servo circuit 83 and slide servo circuit 88. The spindle servo circuit 83 receives the reference clock outputted from the signal processing circuit 89. The controller 90 includes a central processing unit (CPU), read only memory (ROM) and random access memory (RAM), and the CPU realizes the function of the controller 90 by executing programs stored in the ROM on the RAM, a working area.

<Information beam and reference beam>

The information beam and reference beam are not particularly limited and can be appropriately selected depending on the intended purpose. For example, a coherent laser beam emitted from a light source is preferably used.
The laser beam is not particularly limited, and a laser beam having one or more wavelengths selected from 360 nm to 850 nm is suitably used. The wavelength is preferably 380 nm to 800 nm, more preferably 400 nm to 750 nm, most preferably 500 nm to 600 nm where the center of the visual region is most visible.
If the wavelength is less than 360 nm, designing of optical systems becomes difficult. If it exceeds 850 nm, it

may result in low storage capacity.

The light source of the laser beam is not particularly limited and can be appropriately selected depending on the intended purpose. For example, a solid-state laser oscillator, semiconductor laser oscillator, liquid-state laser oscillator, or gas-state laser oscillator can be used. Among these, a gas-state laser oscillator or semiconductor laser oscillator can be suitably used.

The method for applying the information and reference beams is not particularly limited and can be appropriately selected depending on the intended purpose. For example, a laser beam from one light source may be split into the information beam and reference beam. Alternatively two laser beams emitted from different light sources may be used as the information beam and reference beam.

The direction in which the information beam and reference beam are applied is not particularly limited and can be appropriately determined depending on the intended purpose. For example, it is preferable that they be applied in such a way that the optical axis of the information beam is collinear with that of the reference beam.

The information beam (object beam) and reference beam are allowed to interfere with each other in an optical recording medium, and the resultant interference fringes are recorded in the optical recording medium for recording of information.

In collinear holography, information to be recorded which the information beam has is processed into digital data on a beam spot basis, each spot having 4,000 bit data as page data patter.

If the information to be recorded in a target optical recording medium is, for example, image data, it is processed into pixels, a minimum unit of two-dimensional pattern data, by a spatial light modulator (SLM).

In this processing, the image information is subject to computer digital processing using Fourier transform, wherein calculations are conducted to transform a time signal into frequency components thereby generating digital data consisting of 0s and 1s.

As shown in FIG. 3, the information beam having the digital data passes through the object lens 12 and focused in a given size in a recording portion of the recording layer 4 of the optical recording medium 21. In this way the digital data is recorded on a beam spot 32 basis.

More specifically, in the case of optical recording by collinear holography, the information beam 37 is focused to form a beam spot 32 of 200 μm diameter, and the reference beam 38 is applied thereto at a given angle. In this way interference fringes are produced from the information beam 37 and reference beam 38 and recorded in the recording layer 4. After formation of the beam spot 32 followed by recording, the optical recording medium 21 rotates by one pitch. In this way the beam spot 32 is formed for each rotation of the optical recording medium 21 by one pitch, whereby multiplexing recording is achieved.

<Optical recording media>

The optical recording medium used in the optical recording/reproducing apparatus, optical recording method and optical reproduction method of the present invention is an optical recording medium that includes a recording layer for recording information by holography and, where necessary, additional layer(s) appropriately selected.

The optical recording medium may record therein either a relatively thin, flat hologram for recording two-dimensional information or a volume hologram for recording three-dimensional information such as stereoimages. In either case, the optical recording medium may be either a transmissive hologram or a reflective hologram. In addition, the optical recording may record holograms; examples thereof are amplitude holograms, phase holograms, blazed holograms, and complex amplitude holograms.

The optical recording medium includes at least a first substrate, a second substrate, a recording layer on the second substrate, and a filter layer between the second substrate and the recording layer, and is preferably used in collinear holography where information and reference beams are applied in such a way that the optical axis of the information beam is collinear with that of the reference beam.

<First substrate>

The first substrate is not particularly limited in terms of its shape, structure, size etc., and can be appropriately selected depending on the intended purpose. Examples of the shape thereof include a disc shape, card shape, plate shape, and sheet shape. Examples of the structure of the first substrate include a single-layer structure and a multilayered structure; and the size thereof can be appropriately set according to the size of the optical recording medium, for example.

The material for the first substrate is not particularly limited and either organic materials or inorganic materials can be suitably used, but should be selected from those which can ensure the physical strength of the optical recording medium. In the case of a transmissive optical recording medium where recording and reproduction beams are incident through the substrate, the first substrate needs to be sufficiently transparent enough to transmit therein such light of desired wavelengths.. The light transmittance is preferably 70% to 99.9%, more preferably 80% to 99%, and most

preferably 90% to 98%. A light transmittance of less than 70% may result in poor signal reading accuracy; the greater the light transmittance, the more preferable. However, when it is attempted to achieve light transmittance of greater than 99.9%, it may result in poor production efficiency.

Examples of the inorganic materials include glass, quartz and silicon. Among them, glass is preferable in view or accuracy.

Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, polyacrylic resins, polylactate resins, plastic film laminate paper and synthetic paper. These may be used singly or in combination. Among these, polycarbonate resins and amorphous polyolefin resins are preferable in light of their formability, optical characteristics, and costs.

The first substrate may be either a freshly prepared one or a commercially available one.

The thickness of the first substrate is not particularly limited and can be appropriately set depending on the intended purpose; the thickness is preferably 0.1 mm to 5 mm, more preferably 0.3 mm to 2 mm. If the thickness of the first substrate is less than 0.1 mm, the optical disc may become deformed during storage. If the thickness is greater than 5 mm, the weight of the optical disc increases, so too does the load on a drive motor that spins it.

<Second substrate>

The second substrate is not particularly limited in terms of its shape, structure, etc.. Examples of the shape of the second substrate includes a disc shape and card shape, and material that can ensure the mechanical strength of the resultant optical recording medium needs to be selected. In addition, when recording and reproduction beams are incident through the substrate, the second substrate needs to be transparent enough to transmit such light of desired wavelengths.

For the material of the second substrate, glass, ceramics, resins and the like are generally used; however, resins are most preferable in view of their formability and costs.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins and urethane resins. Among these, polycarbonate resins and amorphous polyolefin resins are most preferable in view of their formability, optical characteristics, and costs.

The second substrate may be either a freshly prepared one or a commercially available one.

Multiple numbers of address-servo areas - addressing areas linearly extending in the radial direction of the second substrate - are provided on the substrate at given angles to one another, and each fan-shaped area between adjacent address-servo areas serves as a data area. In the address-servo areas, information for performing a focus servo operation and a tracking servo operation by means of a sampled servo system and address information are previously recorded (or pre-formatted) in the form of emboss pits (servo pits). The focus servo operation can be performed using a reflective surface of the reflective film. For example, wobble pits are used as the information for tracking servo. Note that there is no need to provide the servo pit pattern in a case where the optical recording medium has a card shape.

-Servo beam and servo pit pattern-

The wavelength of the servo beam is not particularly limited and can be appropriately determined depending on the intended purpose. However, it is preferable that the wavelength of the servo beam be different from those of the information and reference beams. More specifically, the wavelength of the servo beam preferably ranges from 350 nm to 500 nm, 620 nm to 700 nm, or 750 nm to 1,000 nm, more preferably ranges from 390 nm to 440 nm, 640 nm to 690 nm, or 770 nm to 900 nm, and most preferably ranges from 400 nm to 420 nm, 650 nm to 680 nm, or 780 nm to 830 nm. Among these wavelength ranges, the wavelength of the servo beam preferably ranges from 400 nm to 420 nm, 650 nm to 680 nm, or 780 nm to 830 nm, with 405 nm, 650 nm, or 780 nm being particularly preferable, and with 405 nm being most preferable.

The track pitch of the servo pit pattern is not particularly limited and can be appropriately determined depending on the intended purpose. For example, when the wavelength of the servo beam is 620 nm to 700 nm, the track pitch is preferably 0.85 μm to 30 μm, more preferably 1.1 μm to 20 μm, further preferably 1.3 μm to 10 μm, and most preferably 1.5 μm to 2 μm. If the track pitch is less than 0.85 μm, it may result in unstable tracking due to light diffusion in the recording layer. If the track pitch is greater than 30 μm, it may result in reduced recording density.

When the wavelength of the servo beam is 750 nm to 1,000 nm, the track pitch is preferably 1.7 μm to 30 μm, more preferably 1.9 μm to 20 μm, and most preferably 2.3 μm to 5 μm. If the track pitch is less than 1.7 μm, it may result in unstable tracking due to light diffusion in the recording layer. If the track pitch is greater than 30 μm, it may result in reduced recording density.

When the wavelength of the servo beam is 350 nm to 500 nm, the track pitch is preferably 0.4 μm to 30 μm, more preferably 0.6 μm to 20 μm, further preferably 0.8 μm to 5 μm, and most preferably 1 μm to 2 μm. If the track pitch is less than 0.4 μm, it may result in unstable tracking due to light diffusion in the recording layer. If the track pitch is greater than 30 μm, it may result in reduced recording density.
If the wavelength of the servo beam is near 405 nm, the track pitch is preferably 0.32 μm to 0.4 μm.
The groove depth of the servo pit pattern is not particularly limited and can be appropriately determined depending on the intended purpose. For example, suppose that the wavelength of the servo beam is λ, the groove depth is preferably λ/(10n) to λ/(3n), more preferably λ/(8n) to λ/(4n), and further preferably λ/(7n) to λ/(5n), where n is the refractive index of medium constituting pits of the servo pit pattern, i.e., refractive index of the material of pits on the light incident side.
Where λ is 650 nm and n is 1.6, the groove depth is preferably 135 nm to 41 nm. In general, if the value of n somewhat varied, the groove depth is preferably 50 nm to 120 nm, more preferably 60 nm to 110 nm, and most preferably 80 nm to 100nm when λ is 650 nm. At other wavelengths the groove depth is preferably proportional to wavelength. For example, where the wavelength of the servo beam is 780 nm and n is 1.6, the groove depth is preferably 163 nm to 49 nm. Where the wavelength of the servo beam is 405 nm and n is 1.6, the groove depth is preferably 84 nm to 25 nm.
The groove width of the servo pit pattern is not particularly limited and can be appropriately determined depending on the intended purpose. For example, the groove is preferably wider than those of general CD, DVD, BD, HD, and DVD. More specifically, where the wavelength of the servo beam is 650 nm, the groove width is preferably 0.25 μm to 1.05 μm, more preferably 0.35 μm to 0.95 μm, further preferably 0.45 μm to 0.85 μm, and most preferably 0.55 μm to 0.75 μm.
Where the wavelength of the servo beam is 780 nm, the groove width is preferably 0.45 μm to 2 μm, more preferably 0.6 μm to 1.6 μm, further preferably 0.8 μm to 1.3 μm, and most preferably 1.0 μm to 1.1 μm.
Where the wavelength of the servo beam is 405 nm, the groove width is preferably 0.2 μm to 1.0 μm, more preferably 0.25 μm to 0.8 μm, further preferably 0.3 μm to 0.6 μm, and most preferably 0.35 μm to 0.5 μm.
The angle of the servo pit pattern is not particularly limited and can be appropriately determined depending on the intended purpose. For example, the angle is preferably 25 degree to 90 degree, more preferably 35 degree to 80 degree, further preferably 40 degree to 70 degree, and most preferably 45 degree to 60 degree. Note that if the angle is 90 degree, the pattern shape becomes rectangular.
The thickness of the second substrate is not particularly limited and can be appropriately set depending on the intended purpose; the thickness is preferably 0.1 mm to 5 mm, more preferably 0.3 mm to 2 mm. If the thickness of the substrate is less than 0.1 mm, the optical disc may become deformed during storage. If the thickness is greater than 5 mm, the weight of the optical disc increase, so too does the load on a drive motor that spins it.

-Reflective film-

The reflective film is formed on the surface of the servo pit pattern of the substrate.
For the material of the reflective film, materials that offer high reflectivity to recording beam and reference beams are preferable. When the wavelength of light to be adopted is 400 nm to 780 nm, Al, Al alloys, Ag, Ag alloys and the like are preferably used. When the wavelength of light to be adopted is 650 nm or more, Al, Al alloys, Ag. Ag alloys, Au, Cu alloys, TiN and the like are preferably used.
With optical recording medium which reflects light by a reflective film and can record or erase information - for example, DVD (Digital Video Disc), directory information indicative of the locations where information has been recorded, the time when information has been recorded, and the locations where errors have occurred and how information has been re-recorded on spare areas can also be recorded on, and erased from the optical recording medium without adversely affecting holograms.
The method for forming the reflective film is not particularly limited and can be appropriately selected depending on the intended purpose; examples thereof include various types of vapor deposition, such as a vacuum vapor deposition, sputtering, plasma CVD, photo CVD, ion plating, and electron beam vapor deposition. Among these, sputtering is most preferable in view of mass productivity, film quality, and the like.
The thickness of the reflective film is preferably 50 nm or more, more preferably 100 nm or more, in order to secure sufficient reflectivity.

<Recording layer>

For recording layer material, materials that can record information by holography and undergo changes in their optical characteristics (e.g., absorption index and/or refractive index) upon irradiation with electromagnetic rays (e.g., γ-ray, X-ray, ultraviolet ray, visible light ray, infrared ray, and radio waves) with predetermined wavelength are used.
The recording layer material contains photothermal conversion material, a photosensitive resin, and a binder,

and further contains additional component(s) appropriately selected on an as-needed basis.

-Photosensitive resin-

The photosensitive resin is not particularly limited as long as it is used for holograms and can be appropriately selected depending on the intended purpose. For example, photopolymers are preferable.

-Photopolymer-

The photopolymer is not particularly limited and can be appropriately selected depending on the intended use. For example, the photopolymer contains a monomer and a photoinitiator and further contains additional components such as a sensitizer and/or oligomers on an as-needed basis.

For the photopolymer, for example, those described in the following can be used: "Photopolymer Handbook" (published by Kogyo Chosakai Publishing Inc., 1989), "Photopolymer Technology" (published by THE NIKKAN KOGYO SHIMBUN LTD., 1989), SPIE Journals and Proceedings Vol. 3010 on pp 354-372 (1997), and SPIE Journals and proceedings Vol. 3291 pp 89-103 (1998). In addition, it is also possible to use the photopolymers described in U.S. Patent Nos. 5759721, 4942112, 4959284, 6221536, and 6743552; International Publication Nos. WO97/44714, 97/13183, 99/26112, and 97/13183; Japanese Patent (JP-B) Nos. 2880342, 2873126, 2849021, 3057082, and 3161230; and Japanese Patent Application Laid-Open (JP-A) Nos. 2001-316416 and 2000-275859.

Examples of the method for applying a recording beam to the photopolymer to change the optical properties thereof include a method utilizing diffusion of low-molecular components. In addition, in order to mitigate change in volume of the photopolymer at the time of polymerization, a component that diffuses in the direction opposite to the direction in which polymerized components are diffused may be added, or a compound having a structure that breaks up by treatment with acids may be added in addition to polymers. When the recording layer is formed using a photopolymer containing the low-molecular component, the recording layer may need a structure that can retain liquid therein. Moreover, when the compound having a structure that breaks up by treatment with acids is added, the change in volume of the photopolymer may be constrained by counterbalancing expansion caused by the structure break up and shrinkage caused by polymerization of monomers.

The monomer is not particularly limited can be appropriately selected in depending on the intended use; examples thereof include radical polymerizable monomers having a unsaturated bond such as acrylic group and methacrylic group, and cationic polymerizable monomers having ether structure such as epoxy ring and oxetane ring. Each of these monomers may be monofunctional or polyfunctional. Photocrosslinking monomers may also be used.

The radical polymerizable monomer is not particularly limited and can be appropriately selected depending on the intended use; examples thereof include acryloylmorpholine, phenoxyethylacrylate, isobonylacrylate, 2-hydroxypropylacrylate, 2-ethylhexylacrylate, 1,6-hexanedioldiacrylate, tripopyleneglycol diacrylate, neopentylglycol PO-modified diacrylate, 1,9-nonanedioldiacrylate, hydroxy pivalic acid neopentylglycol diacrylate, EO-modified bisphenol A diacrylate, polyethyleneglycol diacrylate, pentaerythritol triacrylate, pentaerythritol tetraacrylate, pentaerythritol hexaacrylate, EO-modified glycerol triacrylate, trimethylol propane triacrylate, EO-modified trimethylol propane triacrylate, 2-naphtho-1-oxyethyl acrylate, 2-carbazoil-9-ethylacryate, (trimethylsilyloxy) dimethylsilylpropyl acrylate, vinyl-1-naphthoate, N-vinyl carbazole, 2,4,6-tribromophenylacrylate, pentabromoacrylate, phenyltioethylacrylate, and tetrahydrofurfurylacrylate.

Examples of the cationic polymerizable monomer include bisphenol A epoxy resins, phenol novolac epoxy resins, glycerol triglycidyl ether, 1,6-hexane glycidyl ether, vinyltrimethoxysilane, 4-vinylphenyl trimethoxysilane, $\gamma$-methacryroxypropyl triethoxysilane, and compounds represented by the following formulas (M1) to (M6). These monomers may be used singly or in combination.

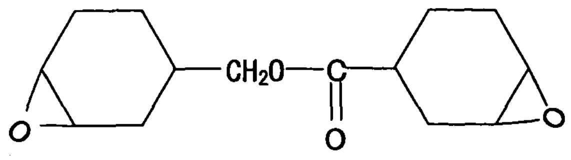

Structural Formula (M1)

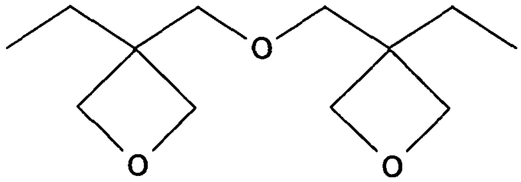

Structural Formula (M2)

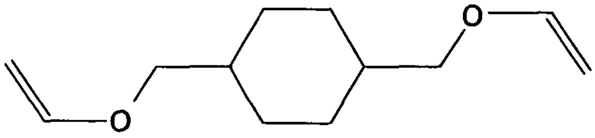

Structural Formula (M3)

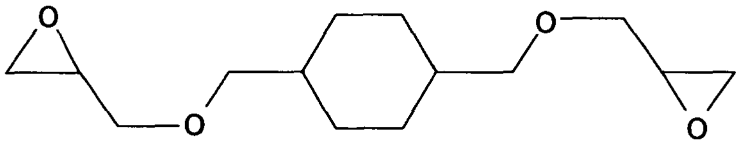

Structural Formula (M4)

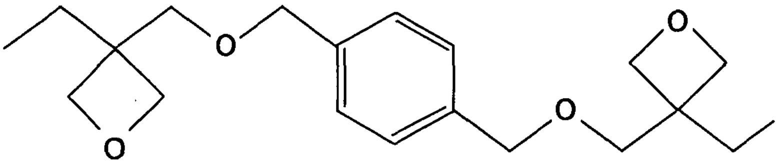

Structural Formula (M5)

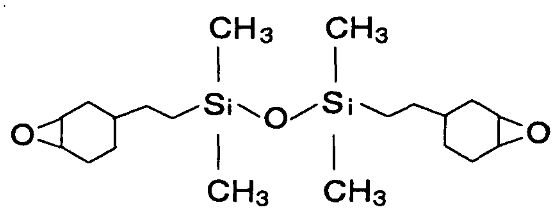

Structural Formula (M6)

The photoinitiator is not particularly limited as long as it is sensitive to a recording beam, and examples thereof include materials that can trigger radical polymerization, cationic polymerization, and crosslinking reactions.

Examples of the photoinitiator include 2,2'-bis(o-chlorophenyl)-4, 4', 5, 5'-tetraphenyl-1, 1'-biimidazole, 2, 4, 6-tris(trichloromethyl)-1, 3, 5-triazine, 2, 4-bis (trichloromethyl)-6-(p-methoxyphenylvinyl)-1, 3, 5-triazine, diphenyl iodonium tetrafluoroborate, diphenyl iodonium hexafluorophosphate, 4, 4'-di-t-butylphenyl iodonium tetrafluoroborate, 4-diethylaminophenylbenzene diazonium hexafluorophotophate, benzoin, 2-hydroxy-2-methyl-1-phenylpropane-2-one, benzophenon, thioxanthone, 2, 4, 6-trimethyl benzoyl diphenyl acyl phosphine oxide, triphenyl butylborate tetraethylammonium, bis(η-5-2,4-cyclopentadiene-1-yl), bis[2,6-difluoro-3-(1H-pyrrole-1-yl)phenyltitaniuml, and diphenyl-4-phenylthiophenylsulfonium hexafluorophosphate. these photoinitiators may be used singly or in combination. In addition, sensitizing pigments may be used together with the photoinitiator, depending on the wavelength of beam to be applied.

Polymerization inhibitors and/or antioxidants may be added in order to improve the shelf life of the recording layer. Examples of such Polymerization inhibitors and antioxidants include hydroquinones, p-benzoquinone, hydroquinone monoethylether, 2, 6-di-t-butyl-p-cresol, 2,2'-methylenebis(4-methyl-6-t-butylphenol), triphenyl phosphite, trisnonylphenyl phosphite, phenothiazine, and N-isopropyl-N'-phenyl-p-phenylenediamine. The amount to be added is 3% by mass or less based on the amount of the total monomers; if it exceeds 3% by mass, the rate of polymerization reactions may be reduced, or polymerization reactions never take place in some cases.

The photopolymer can be obtained by mixing the monomer, the photoinitiator, and other components in accordance with the necessity to allow them to react with one another. When the obtained photopolymer has a substantially low viscosity, it can be formed into a recording layer by casting. If the obtained photopolymer has too high a viscosity to be formed into a recording layer, a recording layer can be formed in the following manner: The photopolymer is deposited on the second substrate using a dispenser, and the first substrate is then pressed against the photopolymer just like putting a lid thereon, whereby the photopolymer is spread over the first substrate to form a recording layer.

Examples of useful photosensitive resins other than the foregoing photopolymers include (1) photorefractive materials that offer a photorefractive effect - an effect that a space-charge distribution is generated as a result of light irradiation, and the refractive index is altered), (2) photochromic materials that undergo changes in refractive index upon irradiation with light, caused by isomerization of their molecules, (3) inorganic materials such as lithium niobate, and barium titanate, and (4) chalcogen materials.

The photorefractive materials (1) are not particularly limited as long as they offer a photorefractive effect, and can be appropriately selected depending on the intended purpose. For example, the photorefractive materials contain charge generating material and charge transporting material, and further contain additional component(s) on an as-needed basis.

The charge generating material is not particularly limited and can be appropriately selected depending on the intended purpose; examples thereof include phthalocyanine dyes or pigments such as metallophthalocyanine, metal-free phthalocyanine and derivatives thereof; naphthalocyanine dyes or pigments; azo dyes or pigments such as monoazo , disazo and trisazo dyes and pigments; pelylene dyes or pigments; indigo dyes or pigments; quinacridone dyes or pigments; polycyclic quinone dyes or pigments such as anthraquinones, and Anthanthron; cyanine dyes or pigments; charge-transfer complexes comprising an electron-accepting substance and an electron-donating substance as typified by TTF-TCNQ; azulenium salts; fullerenes as typified by $C_{60}$ and $C_{70}$ and metanofullerenes, derivatives of fullenerens. These charge generating materials may be used singly or in combination.

The charge transporting material is material carrying holes or electrons, and may be a low-molecular compound or a high-molecular compound.

The charge transporting material is not particularly limited and can be appropriately selected depending on the intended purpose; examples thereof include nitrogen-containing cyclic compounds such as indoles, carbazoles, oxazoles, inoxazoles, thiazoles, imidazoles, pyrazoles, oxadiazoles, pyrazolines, thiadiazoles and triazoles or derivatives thereof; hydrazoline compounds; triphenyl amines; triphenylmethanes; butadienes; stilbenes; quinone compounds such as anthraquinon diphenoquinons or derivatives thereof; fullerenes such as $C_{60}$ and $C_{70}$ and derivatives thereof; $\pi$ conjugate high polymers or oligomers such as polyacetylenes, polypyrroles, polythiophenes and polyanilines; $\sigma$ conjugate high polymers or oligomers such as polysilanes and polygermanes; and polycyclic aromatic compounds such as anthracenes, pyrenes, phenanthrenes, and coronenes. These charge transporting materials may be used singly or in combination.

The following is an example of the method for forming a recording layer using the photorefractive material: a coating solution obtained by dissolving and dispersing the photorefractive material in a solvent is used to prepare a coated film, and the solvent is removed from the coated film to thereby form a recording layer. It is also possible to form a recording layer in the following manner: The photorefractive material is fluidized by heating to prepare a coated film, and the coated film is then quenched to form a recording layer.

The photochromic materials (2) are not particularly limited as long as they can induce a photochromic reaction, and can be appropriately selected depending on the intended use; examples thereof include azobenzene compounds, stilbene compounds, indigo compounds, thioindigo compounds, spiropyran compounds, spirooxazine compounds, fulgide compounds, anthracenes compounds, hydrazone compounds, cinnamic acid compounds and diarylethene compounds. Of these compounds, azobenzene derivatives and stilbene derivatives, which undergo structural changes as a result of cis-trans isomerism upon irradiation with light; and spiropyran derivatives and spirooxazine compounds, which undergo structural changes (ring-opening and ring-closure) upon irradiation with light, are most preferable.

Examples of the chalcogen materials (4) include materials containing chalcogen element-containing chalcogenide glass plus metallic particles which are dispersed in the chalcogenide glass and which can upon irradiation with light diffuse in the chalcogenide glass.

The chalcogenide glass is not particularly limited as long as it is composed of a nonoxide amorphous material containing a chalcogen element such as S, Te, or Se and can be photo-doped with metallic particles.

Preferred examples of amorphous materials containing chalcogen elements include Ge-S glasses, As-S glasses, As-Se glasses and As-Se-Ce glasses. Of these glasses, Ge-S glasses are preferably used. When Ge-S glass is used for the chalcogenide glass, the atomic ratio between Ge and S in the Ge-S glass can be suitably changed depending on the wavelength of light beam to be applied. However, chalcogenide glasses composed primarily of a composition represented by $GeS_2$ are preferably used.

The metallic particles are not particularly limited as long as they can be doped in the chalcogenide glass upon irradiation with light, and can be appropriately selected depending on the intended use; examples thereof include Al, Au, Cu, Cr, Ni, Pt, Sn, In, Pd, Ti, Fe, Ta, W, Zn and Ag. Among these, Ag, Au, and Cu are more likely to be photo-doped in chalogenide glass, and Ag is most preferable because it has excellent photodoping performance.
The amount of the metallic particles dispersed in the chalcogenide glass is preferably 0.1% by volume to 2% by volume, more preferably 0.1% by volume to 1.0% by volume based on the total volume of the recording layer. If the amount of the metallic particles is less than 0.1% by volume, the change in transmittance as a result of photodoping is insufficient, which may result in the reduction in the recording accuracy. Whereas if the amount of the metallic particles is more than 2% by volume, the light transmittance of the recording material decreases, leading to unsatisfactory photodoping in some cases.

-Binder-

The binder is added in order to increase coating capability, strength of the resultant film and holographic recording characteristics, and is appropriately selected in light of its compatibility with hologram material and photothermal conversion material.
The binder is not particularly limited and can be appropriately selected depending on the intended purpose; examples thereon include copolymers of unsaturated acids (e.g., (meth)acrylic acid and itaconic acid) and alkyl (meth) acrylates, phenyl (meth)acrylate, benzyl (meth)acrylate, styrene or $\alpha$-methylstyrene; polymers of alkyl methacrylates and alkyl acrylates, such as polymethyl methacrylate; copolymers of alkyl (meth)acrylates and acrylonitrile, vinyl chloride, vinylidene chloride or styrene; copolymers of acrylonitrile and vinyl chloride or vinylidene chloride; modified celluloses bearing carboxylic groups on their side chain; polyethyleneoxides; polyvinylpyrrolidones; novolac resins that result from the condensation reaction of phenol, o- cresol, m- cresol, p-cresol and/or xylenol and aldehydes and acetone; polyethers of epichlorohydrin and bisphenol A; soluble nylons; polyvinylidene chloride; chlorinated polyolefins copolymers of vinyl chloride and vinyl acetate; copolymers of acrylonitrile and styrene; copolymers of acrylonitrile, butadiene and styrene; polyvinylalkylethers; polyvinylalkylketones; polystyrenes; polyurethanes; polyethylene terephthalate isophthalates; acetyl celluloses; acetylpropyloxy celluloses; acetylbutoxy celluloses; nitro celluloses; Celluloid; polyvinyl butyral; epoxy resins; melamine resins; and formalin resins. Note that the term "(meth)acryl" is used in some cases to denote both or either of "acryl" and/or "methacryl."
The amount of the binder in the solids of the recording layer is not particularly limited and can be appropriately set depending on the intended purpose; it is preferably 10% by mass to 95% by mass, more preferably 35% by mass to 90% by mass. If the amount of the binder is less than 10% by mass, interference images may not be obtained stably, whereas if the amount exceeds 95% by mass, it may result in poor diffraction efficiency.
The amount of the binder in the photosensitive layer is preferably 10% by mass to 95% by mass, more preferably 35% by mass to 90% by mass based on the total amount of solids in the photosensitive layer.

-Additional component contained in the recording layer-

In the present invention it is preferable to add nitro cellulose to the recording layer in order to improve the photothermal conversion effect. Nitro cellulose decomposes under heat generated from a light absorber that has absorbed the near-infrared laser beam, thereby facilitating the polymerization reaction in photopolymers.
The nitrocellulose can be prepared in the following procedure: Natural cellulose purified with a conventional method is esterified with mix acid, and nitro groups are entirely or partially introduced into three hydroxyl groups on the glucopyranose ring, a building block of cellulose. The nitrification degree in the nitrocellulose is preferably 2 to 13, more preferably 10 to 12.5, most preferably 11 to 12.5. Here, the term "nitrification degree" represents percent by weight of nitrogen atoms in nitrocellulose. If the nitrification degree is too high, through the polymerization reaction in the photopolymers is facilitated, it may result in the reduction in room temperature stability. In addition, the resultant nitrocellulose becomes explosive, which is dangerous. If the nitrification degree is too low, the polymerization reaction in the photopolymers is not facilitated well enough.
The degree of polymerization of the nitrocellulose is preferably 20 to 200, more preferably 25 to 150. If the degree of polymerization is too high, it may result in failure to remove the recording layer completely. If the degree of polymerization is too low, coating capability of the recording layer tends to be reduced. The content of the nitrocellulose in the recording layer is preferably 0% by mass to 80% by mass, more preferably 0.5% by mass to 50% by mass, most preferably 1% by mass to 25% by mass based on the total amount of solids in the recording layer.
The recording layer can be formed with a method known in the art. For example, the recording layer can be suitably formed with, for example, the vapor deposition method, wet deposition method, MBE (molecular beam epitaxy) method, cluster ion beam method, molecular lamination method, LB (Langumuir-Blodgett) method, printing method, or transferring method Alternatively, the recording layer may be formed with a two-component urethane matrix formation

method described in U.S. Patent No. 6743552.

The formation of the recording layer by means of the wet deposition method can be suitably performed by, for example, using a coating solution obtained by dissolving and dispersing the recording layer material in a solvent, (i.e., by applying the coating solution on a support and drying it). The wet deposition method is not particularly limited and can be appropriately selected from those known in the art depending on the intended use; examples thereof include an ink-jet method, spin coating method, kneader coating method, bar coating method, blade coating method, casting method, dipping method, and curtain coating method.

The thickness of the recording layer is not particularly limited and can be appropriately set depending on the intended purpose; the thickness of the recording layer is preferably 1 μm to 1,000 μm, more preferably 100 μm to 700 μm.

If the thickness of the recording layer is within a preferable range, it will result in high S/N ratios even when 10- to 300-fold shift-multiplexing recording operation is performed; higher S/N ratios can be obtained in a more preferable thickness range.

<Filter layer>

The filter layer serves to avoid changes in the wavelength to be selectively reflected even when the incident angle is changed, and has a function to prevent irregular reflection of the information and reference beams at the reflective film of an optical recording medium to thereby prevent the occurrence of noise. Providing such a filter layer on the optical recording medium will lead to high definition and excellent diffraction efficiency.

The filter layer preferably trasnmits therein a first beam but reflects a second beam having a different wavelength than that of the first beam, wherein the wavelength of the first beam is preferably 350 nm to 600 nm and the wavelength of the second beam is preferably 600 nm to 900 nm. In order for the filter layer to achieve this it is preferable to employ an optical recording medium that includes, in sequence, the recording layer, filter layer and servo pit pattern from the optical system side.

At the incident angle of +40°, the filter layer preferably has an optical transmittance of 50% or more, more preferably 80% or more for light with a wavelength of 655 nm, and has a reflectivity of 30% or more, more preferably 40% or more for light with a wavelength of 532 nm.

The filter layer is not particularly limited and can be appropriately selected depending on the intended purpose. For example, the filter layer is formed of a dielectric material-deposited layer, a single-layered or multilayered cholesteric liquid crystal layer and, where necessary, additional layer(s). Moreover, the filter layer may have a coloring material-containing layer.

The filter layer may be directly applied and deposited onto the support together with the recording layer. Alternatively, the filter layer may be previously deposited on a base material such as a film to prepare an optical recording medium filter, and the filter may be deposited on the support.

-Dielectric material-deposited layer-

The dielectric material-deposited layer is a laminate of multiple dielectric thin layers with different refraction indices. For the dielectric material-deposited layer to serve as a reflective film through which light of desired wavelength passes, it is preferably a laminate of alternating dielectric thin layers with high and low indices of refraction; however, three or more different dielectric thin layers may be laminated.

The number of the dielectric thin layers to be laminated is preferably 2 to 20, more preferably 2 to 12, still further preferably 4 to 10, most preferably 6 to 8. If the number of the dielectric thin layers to be laminated is greater than 20, it results in the reduction in productivity because of multilayer vapor deposition. The object and effect of the present invention cannot be achieved in some cases.

The order in which the dielectric thin layers are laminated is not particularly limited, and can be appropriately determined depending on the intended purpose. A dielectric thin layer with low refractive index is formed deposited in a case where an adjacent dielectric thin layer has high refractive index. On the other hand, a dielectric thin layer with high refractive index is formed deposited in a case where an adjacent dielectric thin layer has low refractive index. The criteria of refractive index for determining whether a dielectric thin layer has high or low refractive index is preferably set to 1.8; note, however, that this determination is made on an arbitrary basis. That is, dielectric thin layers with different refractive indices equal to or greater than 1.8 (i.e., there are dielectric thin layers with high and low refractive indices) may be used to form such a laminate.

The material for the dielectric thin layer with high refractive index is not particularly limited and can be appropriately selected depending on the intended purpose; examples thereof include $Sb_2O_3$, $Sb_2S_3$, $Bi_2O_3$, $CeO_2$, $CeF_3$, $HfO_2$, $La_2O_3$, $Nd_2O3$, $Pr_6O_{11}$, $Sc_2O_3$, SiO, $Ta_2O_5$, $TiO_2$, TlCl, $Y_2O_3$, ZnSe, ZnS and $ZrO_2$. Among these, $Bi_2O_3$, $CeO_2$, $CeF_3$, $HfO_2$, SiO, $Ta_2O_5$, $TiO_2$, $Y_2O_3$, ZnSe, ZnS and $ZrO_2$ are preferable, and SiO, $Ta_2O_5$, $TiO_2$, $Y_2O_3$, ZnSe, ZnS and $ZrO_2$ are more preferable.

The material for the dielectric thin layer with low refractive index is not particularly limited and can be appropriately selected depending on the intended purpose; examples thereof include $Al_2O_3$, $BiF_3$, $CaF_2$, $LaF_3$, $PbCl_2$, $PbF_2$, LiF, $MgF_2$, MgO, $NdF_3$, $SiO_2$, $Si_2O_3$, NaF, $ThO_2$ and $ThF_4$. Among these, $Al_2O_3$, $BiF_3$, $CaF_2$, $MgF_2$, MgO, $SiO_2$ and $Si_2O_3$ are preferable, and $Al_2O_3$, $CaF_2$, $MgF_2$, MgO, $SiO_2$ and $Si_2O_3$ are more preferable.

Note that the atomic ratio in the material for the dielectric thin layer is not particularly limited and can be appropriately set depending on the intended purpose. The atomic ratio can be adjusted by changing the concentration of atmosphere's gas upon deposition of dielectric thin layers.

The method for depositing the dielectric thin layer is not particularly limited and can be appropriately selected depending on the intended purpose. For example, a vacuum vapor deposition process such as ion plating and ion beam, a physical vapor deposition (PVD) such as sputtering, and a chemical vapor deposition (CVD) can be used. Among these methods, a vacuum vapor deposition and sputtering are preferable, and sputtering is most preferable.

For the sputtering, DC sputtering is preferable because it offers high deposition rate. Note that highly conductive material is preferably used when DC sputtering is employed.

Examples of the method for depositing multiple dielectric thin layers by sputtering include (1) a single-chamber method, where multiple dielectric thin layers are alternately or sequentially deposited using a single chamber, and (2) a multi-chamber method, where multiple dielectric thin layers are sequentially deposited using multiple chambers. In view of the productivity and to prevent contamination among materials, the multi-chamber method is most preferable.

The thickness of the dielectric thin layer, as expressed in terms of optical wavelength, is preferably $\lambda/16$ to $\lambda$, more preferably $\lambda/8$ to $3\lambda/4$, most preferably $\lambda/6$ to $3\lambda/8$.

-Coloring material-containing layer-

The coloring material-containing layer is formed of a coloring material, a binder resin, a solvent and, where necessary, additional component(s).

Suitable examples of the coloring material include pigments and dyes. Among these, red pigments and red dyes are preferable because they absorb light of wavelength 532 nm and transmits a servo beam of wavelength 655 nm or 780 nm; red pigments are most preferable.

The red dyes are not particularly limited and can be appropriately selected from those known in the art; examples thereof include acidic dyes such as C. I. Acid Reds 1, 8, 13, 14, 18, 26, 27, 35, 37, 42, 52, 82, 87, 89, 92, 97, 106, 111, 114, 115, 134, 186, 249, 254 and 289; basic dyes such as C. I. Basic Reds 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112; and reactive dyes such as C. I Reactive Reds 1, 14, 17, 25, 26, 32, 37, 44, 46, 55, 60, 66, 74, 79, 96 and 97. These dyes may be used singly or in combination.

The red pigments are not particularly limited and can be appropriately selected from those known in the art; examples thereof include C. I. Pigment Red 9, C. I. Pigment Red 97, C. I. Pigment Red 122, C. I. Pigment Red 123, C. I. Pigment Red 149, C. I. Pigment Red 168, C. I. Pigment Red 177, C. I. Pigment Red 180, C. I. Pigment Red 192, C. I. Pigment Red 209, C. I. Pigment Red 215, C. I. Pigment Red 216, C. I. Pigment Red 217, C. I. Pigment Red 220, C. I. Pigment Red 223, C. I. Pigment Red 224, C. I. Pigment Red 226, C. I. Pigment Red 227, C. I. Pigment Red 228, C. I. Pigment Red 240, C. I. Pigment Red 48:1, Permanent Carmine FBB (C. I. Pigment Red 146), Permanent Ruby FBH (C. I. Pigment Red 11) and Faster Pink B Supra (C. I. Pigment Red 81). These pigments may be used singly or in combination.

Among these red pigments, those with an optical transmittance of 10% or less for light of wavelength 532 nm and 90% or more for light of wavelength 655 nm are most preferably used.

The amount of the coloring material is preferably 0.05% by mass to 90% by mass, more preferably 0.1% by mass to 70% by mass based on the total amount of the solids of the coloring material-containing layer. If the amount of the coloring material is less than 0.05% by mass, the thickness of the coloring material-containing layer may need to be set to 500 $\mu$m or more. If the amount of the coloring material is greater than 90% by mass, the coloring material-containing layer may collapse during its preparation due to lack of self-supporting properties.

The binder resin in the coloring material-containing layer is not particularly limited and can be appropriately selected from those known in the art; examples thereof include polyvinylalcohol resins; vinyl chloride/vinyl acetate copolymers; copolymers of vinyl chloride or vinyl alcohol and at least one of malleic acid and acrylic acid; vinyl chloride/vinylidene chloride copolymers; vinyl chloride/acrylonitrile copolymers; ethylene/vinyl acetate copolymers; celluloses derivatives such as nitrocellulose resins; polyacrylic resins; polyvinylacetal resins; polyvinylbutyral resins; epoxy resins; phenoxy resins; polyurethane resins; and polycarbonate resins. These materials can be used singly or in combination.

In addition, polar groups (e.g., epoxy group, $CO_2H$, OH, $NH_2$, $SO_3M$, $OSO_3M$, $PO_3M_2$, and $OPO_3M_2$, where M represents a hydrogen atom, alkali metal, or ammonium and if two or more M's appear, they may be different) are preferably introduced into the molecules of the above-listed binder resins in order to increase their dispersibility and durability. The amount of such polar groups is preferably $10^{-6}$ to $10^{-4}$ equivalents per gram of binder resin. The binder resins are preferably cured by the addition of a known isocyanate crosslinking agent.

The amount of the binder resin is preferably 10% by mass to 99.95% by mass, more preferably 30% by mass to 99.9% by mass based on the total amount of the solids of the coloring material-containing material.

Each of these components described above is dissolved or dispersed in a suitable solvent to prepare a coating solution, and the coating solution is applied over a substrate to be described later using a desired coating method. In this way a coloring material-containing layer can formed.

The solvent is not particularly limited and can be appropriately selected from those known in the art; examples thereof include water; alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; γ-butyrolactone; N-methylpyrrolidone; dimethylsulfoxide; chloroform; and tetrahydrofuran. These solvents may be used singly or in combination.

The coating method is not particularly limited and can be appropriately selected from those known in the art depending on the intended use; examples thereof include an ink-jet method, spin coating method, kneader coating method, bar coating method, blade coating method, casting method, dipping method, and curtain coating method.

The thickness of the coloring material-containing layer is preferably 0.5 μm to 200 μm, more preferably 1.0 μm to 100 μm, for example. If the thickness of the coloring material-containing layer is less than 0.5 μm, binder resin that encapsulates coloring material to form a film cannot be added in sufficient amounts in some cases. If the thickness of the coloring material-containing layer is greater than 200 μm, the resultant filter is made too thick, thus requiring a big optical system for an irradiating beam and servo beam in some cases.

<Cholesteric liquid crystal layer>

The cholesteric liquid crystal layer contains at least cholesterol derivative, a nematic liquid crystal compound and a chiral compound, and further contains a polymerizable mononer and, where necessary, additional component(s)

The cholesteric liquid crystal layer may be either a single-layered cholesteric liquid crystal layer or a multilayered cholesteric liquid crystal layer.

The cholesteric liquid crystal layer preferably has a circularly polarizing function. The cholesteric liquid crystal layer selectively reflects light components which have been circularly polarized in the direction in which the liquid crystal helix rotates (i.e., to the right or left) and which have a wavelength that equals to the pitch of the liquid crystal helix. The cholesteric liquid crystal layer utilizes selective reflection characteristics to separate a particular circularly polarized component with a particular wavelength from natural light composed of light components of different wavelengths, and reflects the other light components.

The optical recording medium filter preferably has reflectivity of 40% or more for light of a wavelength range of $\lambda_0$ to $\lambda_0$/cos20° (where $\lambda_0$ represents the wavelength of irradiation light) incident at an angle of ±20° (measured from the normal of the surface of the recording layer). Most preferably, the optical recording medium filter has reflectivity of 40% or more for light of a wavelength range of $\lambda_0$ to $\lambda_0$/cos40° (where $\lambda_0$ represents the wavelength of irradiation light) incident at an angle of ±40° (measured from the normal of the surface of the recording layer). If the optical reflectivity is 40% or more for light of a wavelength range of $\lambda_0$ to $\lambda_0$/cos20°, especially $\lambda_0$ to $\lambda_0$/cos40° (where $\lambda_0$ represents the wavelength of irradiation light), it is made possible to eliminate the dependency of reflectivity on incident angle and to adopt optical lens system that is used for general optical recording media. To achieve this it is preferable that the selectively-reflecting wavelength range of the cholesteric liquid crystal layer be wide.

More specifically, when a single-layer cholesteric liquid crystal layer is used, the selectively-reflecting wavelength range Δλ is expressed by the following Equation (1). Thus, it is preferable to employ liquid crystals with a large value of (ne-no).

$$\Delta\lambda = 2\lambda(\mathrm{ne} - \mathrm{no}) / (\mathrm{ne} + \mathrm{no}) \ldots \text{ Equation (1)}$$

where "no" represents the refractive index of the nematic liquid crystal molecules for normal light, contained in the cholesteric liquid crystal layer, "ne" represents the refractive index of the nematic liquid crystal molecules for abnormal light, and λ represents the central selective light reflection wavelength.

Moreover, as shown in JP-A No. 2004-352081, it is preferable to use an optical recording medium filter in which the helical pitch continuously changes in the thickness direction of the liquid crystal layers, which is achieved by employing as a chiral compound a photo-reactive chiral compound that is photosensitive and that can greatly change the helical pitch of liquid crystals by irradiation with light and by adjusting the photo-reactive chiral compound content and UV irradiation time.

In the case of a multilayered cholesteric liquid crystal layer, it is preferable to laminate cholesteric liquid crystal layers with different values of the central selective light reflection wavelength and where the director axis of cholesteric liquid crystal molecules in the layers rotates in the same direction.

The cholesteric liquid crystal layer is not particularly limited as long as it has the above characteristics and can be appropriately selected depending on the intended purpose. As described above, the cholesteric liquid crystal layer contains a nematic liquid crystal compound and a chiral compound, further contains a polymerizable monomer and, where necessary, further contains additional component(s).

--Nematic Liquid Crystal Compound--

The nematic liquid crystal compound features that its liquid crystal phase is immobilized at the liquid crystal phase transition temperature or lower. The nematic liquid crystal compound is appropriately selected from liquid crystal compounds having an anisotropy refractive index $\Delta n$ of 0.10-0.40, high molecular liquid crystal compounds, and polymerizable liquid crystal compounds. The nematic liquid crystal compound can be used as a solid phase, by aligning while in the liquid crystal state by means of an alignment plate subjected to the rubbing treatment, and then cooling for immobilization.

The nematic liquid crystal compounds are not particularly limited and can be appropriately selected depending on the intended purpose; nematic liquid crystal compound having polymerizables group in their molecular structure are preferable in order to ensure curability. Among them, UV polymerizable liquid crystals are suitable. The UV polymerizable liquid crystals may be selected from the commercially available products, and examples thereof include PALIOCOLOR LC242 manufactured by BASF AG, E7 [product name] manufactured by Merck & Co., Inc., LC-Silicon-CC3767 manufactured by Wacker-Chemie AG, and L35, L42, L55, L59, L63, L79 and L83 manufactured by Takasago International Corp.

The amount of the nematic liquid crystal compound is preferably 30% by mass to 99% by mass, and more preferably 50% by mass to 99% based on the total amount of the solids of the cholesteric liquid crystal layer. If the amount is less than 30% by mass, alignment of molecules of the nematic liquid crystal compound may become insufficient.

--Chiral Compound--

The chiral compounds are not particularly limited and can be appropriately selected from the known compounds depending on the intended purpose. Examples are isomannide compounds, catechine compounds, isosorbide compounds, fenchone compounds, and carbon compounds in view of improving hue and color purity of the liquid crystal compound. These may be used singly or in combination.
The chiral compound may be selected from the commercially available products, and examples thereof include S101, R811 and CB15 manufactured by Merck & Co., Inc., and PALIOCOLOR LC756 manufactured by BASF.

The amount of the chiral compound is preferably 0% by mass to 30% by mass, and more preferably 0% by mass to 20% by mass based on the total amount of the solids of the cholesteric liquid crystal layer. In the case where the content is more than 30% by mass, alignment of molecules in the cholesteric crystal layer may become insufficient.

--Polymerizable Monomer--

The cholesteric liquid crystal layer optionally contains a polymerizable monomer, for example, for the purpose of improve a curing degree such as a film strength. For example, after irradiating light so as to change (to pattern) the spiral of the liquid crystal, e.g., forming a distribution of the selective reflection wavelength, the spiral structure (selective reflection property) thereof is fixed. By adding the polymerizable monomer in the cholesteric liquid crystal layer, the strength of the fixed cholesteric liquid crystal layer is improved. In the case where the liquid crystal compound has a polymerizable group in its molecular structure, it is however not necessary to add the polymerizable monomer.

The polymerizable monomer is not particularly limited, and can be appropriately selected from the known monomers depending on the intended purpose. Examples thereof include monomers having ethylenically unsaturated bonds therein. Specific examples thereof include polyfunctional monomers such as pentaerythritol tetraacrylate, and dipentaerythritol hexaacrylate. These may be used singly or in combination.

The added amount of the polymerizable monomer is preferably 0% by mass to 50% by mass, and more preferably 1% by mass to 20% by mass based on the total amount of the solids of the cholesteric liquid crystal layer. If the amount is more than 50% by mass, alignment of molecules of the cholesteric liquid crystal layer may be inhibited.

--Additional Components--

The aforementioned additional components are not particularly limited, and can be appropriately selected depending on the intended purpose. Examples thereof include photopolymerization initiators, sensitizers, binder resins,

polymerization inhibitors, solvents, surfactants, thickeners, dyes, pigments, UV absorbers, and gelling agents.

The photopolymerization initiator is not particularly limited, and can be appropriately selected from the known products depending on the intended purpose. Examples thereof include p-methoxyphenyl-2,4-bis(trichloromethyl)-s-triazine, 2-(p-buthoxystyryl)-5-trichloromethyl-1,3,4-oxadiazole, 9-phenylacridine, 9,10-dimethylbenzphenazine, benzophenone and Michler's ketone mixture, hexaarylbiimidazole and mercaptobenzoimidazole mixture, and benzyldimethylketal, thioxanthone and amine mixtures are available. They may be used singly or in combination.

The photopolymerization initiator may be selected from commercially available products. Examples thereof include IRGA CUREs 907, 369, 784, and 814 manufactured by Ciba Specialty Chemicals KK, and Lucirin TPO manufactured by BASF.

The amount of the photopolymerization initiator is preferably 0.1% by mass to 20% by mass, and more preferably 0.5% by mass to 5% by mass based on the total amount of the solids of the cholesteric crystal liquid layer. If the amount is less than 0.1% by mass, it may take a long time to cure at the time of radiation since the curing efficiency is low. If the amount is more than 20% by mass, light transmittance becomes low from the ultraviolet light range to the visible light range.

The sensitizer is added on an as-needed basis in order to increase the degree of cure in the cholesteric liquid crystal layer.

The sensitizer is not particularly limited and can be appropriately selected from those known in the art; examples thereof include diethylthioxanthone and isopropylthioxanthone.

The amount of the sensitizer is preferably 0.001% by mass to 1% by mass based on the total amount of the solids in the cholesteric liquid crystal layer.

The binder resin is not particularly limited and can be appropriately selected from those known in the art; examples thereof include polyvinyl alcohols; polystyrene compounds such as polystyrene and poly-$\alpha$-methylstyrene; cellulose resins such as methylcellulose, ethylcellulose and acetylcellulose; acid cellulose derivatives bearing carboxylic groups on their side chains; acetal resins such as polyvinyl formal and polyvinyl butyral; methacrylic acid copolymers; acrylic acid copolymers; itaconic acid copolymers; crotonic acid copolymers; malleic acid copolymers; partially-esterified malleic acid copolymers; homopolymers of acrylic acid alkylesters or homopolymers of methacrylic acid alkyl esters; and polymers with additional hydroxyl groups. These binder resins may be used singly or in combination.

Examples of alkyl groups in the homopolymers of acrylic acid alkylesters or homopolymers of methacrylic acid alkyl esters include methyl group, ethyl group, n-propyl group, n-butyl group, iso-butyl group, n-hexyl group, cyclohexyl group and 2-ethylhexyl group.

Examples of the polymers with additional hydroxyl groups include benzyl(meth)acrylate/(homopolymers of methacrylic acid) acrylic acid copolymers, and multicomponent copolymers of benzyl(meth)acrylate/(meth)acrylic acid/other monomers.

The amount of the binder resin is preferably 0% by mass to 80% by mass, more preferably 0% by mass to 50% by mass based on the total amount of the solids in the cholesteric liquid crystal layer. If the amount of the polymerizable monomers is greater than 80% by mass, it may result in poor alignment of cholesteric liquid crystal molecules.

The polymerization inhibitor is not particularly limited and can be appropriately selected depending on the intended purpose; examples thereof include hydroquinones, hydroquinone monoethylethers, phenothiazines, benzoquinones and derivatives thereof.

The amount of the polymerization inhibitor is preferably 0% by mass to 10% by mass, more preferably 100 ppm to 1% by mass based on the amount of the solids in the polymerizable monomer.

The solvent is not particularly limited and can be appropriately selected from those known in the art; examples thereof include alkoxypropionic acid esters such as 3-methoxypropionic acid methylester, 3-methoxypropionic acid ethylester, 3-methoxypropionic acid propylester, 3-ethoxypropionic acid methylester, 3-ethoxypropionic acid ethylester and 3-ethoxypropionic acid propylester; alkoxy alcohol esters such as 2-methoxypropylacetate, 2-ethoxypropylacetate and 3-methoxybutylacetate; lactic acid esters such as methyl lactate and ethyl lactate; ketones such as methyl ethyl ketone, cyclohexanone and methylcyclohexanone; $\gamma$-butyrolactone; N-methylpyrrolidone; dimethylsulfoxide; chloroform; and tetrahydrofuran. These solvents may be used singly or in combination.

The cholesteric liquid crystal layer can be formed in the following procedure: For example, a coating solution for cholesteric liquid crystal layer prepared by use of the above solvent is applied on the base material (note that this coating solution is prepared for each liquid crystal layer in the case of a multilayered cholesteric liquid crystal layer). Thereafter, the coating solution is dried, and cured by irradiating it with ultraviolet light.

For mass production, the cholesteric liquid crystal layer can be formed in the following procedure: The base material is previously wound in a roll shape, and the coating solution is then applied on the base material using a long, continuous coater such as a bar coater, die coater, blade coater, or curtain coater.

Examples of the coating method include a spin coating method, casting method, roll coating method, flow coating method, printing method, dip coating method, casting deposition method, bar coating method and gravure printing method.

The UV irradiation condition is not particularly limited and can be appropriately determined depending on the intended purpose; the wavelength of UV light to be applied is preferably 160 nm to 380 nm, more preferably 250 nm to 380 nm; irradiation time is preferably 0.1 seconds to 600 seconds, more preferably 0.3 second to 300 seconds. By adjusting the UV irradiation condition, it is possible change the helical pitch of the cholesteric liquid crystals continuously in the thickness direction of the liquid crystal layer.

It is also possible to add an ultraviolet absorber to the cholesteric liquid crystal layer in order to adjust the UV irradiation condition. The ultraviolet absorber is not particularly limited and can be appropriately selected depending on the intended purpose; suitable examples thereof include benzophenone ultraviolet absorbers, benzotriazole ultraviolet absorbers, salicylic acid ultraviolet absorbers, cyanoacrylate ultraviolet absorbers and oxalic acid anilide ultraviolet absorbers. Specific examples of these ultraviolet absorbers are disclosed in JP-A Nos. 47-10537, 58-111942, 58-212844, 59-19945, 59-46646, 59-109055 and 63-53544; Japanese Patent Application Publication (JP-B) Nos. 36-10466, 42-26187, 48-30492, 48-31255, 48-41572 and 48-54965, 50-10726; and U.S. Patent Nos. 2719086, 3707375, 3754919 and 4220711.

In the case of a multilayered colesteric liquid crystal layer, the thickness of each cholesteric liquid crystal layer is preferably 1 μm to 10 μm, more preferably 2 μm to 7 μm. If the thickness of the cholesteric liquid crystal layer is less than 1 μm, it results in poor selective reflectivity. If the thickness of the cholesteric liquid crystal layer is greater than 10 μm, uniformly aligned liquid crystal molecules in the cholesteric liquid crystal layer may orient in random directions.

The total thickness of the cholesteric liquid crystal layers in a multilayered cholesteric liquid crystal layer (or the thickness of single cholesteric layer in the case of a single-layered liquid crystal layer) is preferably 1 μm to 30 μm, more preferably 3 μm to 10 μm.

-Manufacturing method for an optical recording medium filter which has a cholesteric liquid crystal layer-

The manufacturing method for the filter is not particularly limited and can be appropriately selected depending on the intended purpose.

The optical recording medium filter is not particularly limited and can be appropriately selected depending on the intended purpose. It is preferable that the filter be formed into a disc shape (e.g., by stamping) together with a base material and subsequently be placed onto the second substrate of the optical recording medium. If the filter is used for a filter layer for optical recording media, it can be directly provided on the second substrate without interposing a base material therebetween.

<Base material>

The base material is not particularly limited and can be appropriately selected depending on the intended purpose. For example, the base material may be either a freshly prepared one or a commercially available one.

The thickness of the base material is not particularly limited and can be appropriately set depending on the intended purpose; the thickness is preferably 10 μm to 500 μm, more preferably 50 μm to 300 μm. If the thickness of the base material is less than 10 μm, the substrate bends and thus its adhesion properties with other components are reduced. If the thickness of the base material is greater than 500 μm, the focus of information light needs to be shifted by a large amount from the focus of reference light, leading to the necessity of preparing a big optical system. For bonding films through which light of desired wavelength passes, known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1 μm to 5 μm in light of the optical characteristics and slimness. In the case of agglutinant, the thickness is preferably 1 μm to 50 μm, more preferably 2 μm to 30 μm.

Note, however, that it is possible to directly form the filter layer on the substrate depending on the circumstances.

<Additional layer>

The additional layer is not particularly limited and can be appropriately selected depending on the intended purpose; examples thereof include a first gap layer, second gap layer, antireflection layer, and protective layer.

-First gap layer-

The first gap layer is provided between the filter layer and the reflective film on an as-needed basis for smoothing the surface of the second substrate. Moreover, the first gap layer is effective to adjust the size of holograms formed in the recording layer. Specifically, since somewhat large regions where optical interference between an information beam and recording reference beam takes place need to be secured in the recording layer, it is effective to provide the first gap layer between the recording layer and the servo pit pattern.
The first gap layer can be formed by, for example, applying UV curable resin or the like on the servo pit pattern by spin coating or the like and by curing the resin. In addition, when a filter layer is formed on a transparent base material, the transparent base material also serves as the first gap layer.
The thickness of the first gap layer is not particularly limited and can be appropriately set depending on the intended purpose; the thickness is preferably 1 μm to 200 μm.

-Second gap layer-

The second gap layer is provided between the recording layer and the filter layer on an as-needed basis.
The material for the second gap layer is not particularly limited and can be appropriately selected depending on the intended purpose; examples thereof include transparent resin films such as triacetylcellulose (TAC), polycarbonate (PC), polyethylene terephthalate (PET), polystyrene (PS), polysulfone (PSF), polyvinylalcohol (PVA) and methyl polymethacrylate (PMMA); norbornene resin films such as ARTON (from JSR Corp.), ZEONOA (from Nippon Zeon). Among these, those with high isotropy are preferable, and TAC, PC, ARTON and ZEONOA are most preferable.
The thickness of the second gap layer is not particularly limited and can be appropriately set depending on the intended purpose; the thickness is preferably 1 μm to 200 μm.

-Protective layer-

The protective layer is used for the purpose of (1) protecting the dye-containing recording layer from scratches, dusts, and smears, (2) increasing the shelf stability of the dye-containing recording layer, (3) increasing reflectivity, and so forth. The protective layer is made of either inorganic material or organic material. As the inorganic material, for example, SiO and $SiO_2$ can also be employed. As the organic material, for example, heat-softening resins, heat-melting resins and UV curable resins can also be used, such as polymethylacrylate resins, polycarbonate resins, epoxy resins, polystyrene resins, polyester resins, vinyl resins, celluloses, aliphatic hydrocarbon resins, aromatic hydrocarbon resins, natural rubbers, styrene-butadiene resins, chloroprene rubbers, waxes, alkyd resins, drying oils, and rosins. Among them, UV curable resins are most preferable in view of their high productivity.
Where necessary, the protective layer may further contain a stabilizer, dispersant, fire retardant, lubricant, antistatic agent, surfactant, and/or plasticizer, for example.
The thickness of the protective layer is not particularly limited and can be appropriately set depending on the intended purpose; it is preferably 0.01 μm to 30 μm, more preferably 0.05 μm to 10 μm.

(Manufacturing method for optical recording medium)

The manufacturing method for optical recording medium used in the present invention is not particularly limited and can be appropriately selected depending on the intended purpose. The manufacturing method includes, for example, a composition preparing step, recording layer disposing step, filter layer forming step, first gap layer forming step, and laminate forming step and, where necessary, further includes additional step(s) appropriately selected.

<Composition preparing step>

The composition preparing step is a step of preparing an optical recording composition, wherein a composition that contains a photopolymer consisting of a monomer, photoinitiator, sensitizer, oligomer, binder, and optional additional component appropriately selected on an as-needed basis is dissolved, dispersed, and mixed with a solvent. The preparation is carried out in a dry, low-temperature environment, e.g., at a temperature of 23°C and humidity of 10%.

<Recording layer disposing step>

The recording layer disposing step is a step of disposing on the filter layer, or on the second gap layer in a case where it is provided on the filter layer, a recording layer for recording information by holography. In this step the optical recording composition prepared in the composition preparing step is applied with a coating method or the like.

The method of disposing the recording layer is not particularly limited and can be appropriately selected depending on the intended purpose. For example, wet deposition method or injection method can be employed. The wet deposition method forms a recording layer by using a solution (coating solution) obtained by dissolving and dispersing the recording layer material in a solvent (i.e., by applying the coating solution on a support and drying it). The wet deposition method is not particularly limited and can be appropriately selected from those known in the art depending on the intended use; examples thereof include an ink-jet method, spin coating method, kneader coating method, bar coating method, blade coating method, casting method, dipping method, and curtain coating method.

The injection method injects a recording layer solution in a space between the first and second substrates. A disc cell is fabricated before hand by sandwiching outer circumferential and inner circumferential spacers between the first and second substrates. A portion of the outer circumferential space is notched, and a recording layer solution is injected though the notch.

The injection method is not particularly limited and can be appropriately selected depending on the intended purpose; examples thereof include outer circumference injection method, inner circumference injection method, and gap injection method.

For example, the injection conditions are as follows: Temperature = 23°C; viscosity = 330 mPa·s; pressure = 0.5M; humidity = 10%; curing time = 40 min at 80°C.

The injection device is not particularly limited and can be appropriately selected depending on the intended purpose; examples thereof include a syringe and a compressed air dispenser.

The thickness of the recording layer is not particularly limited and can be appropriately set depending on the intended purpose; it is preferably 1 μm to 1,000 μm, more preferably 100 μm to 700 μm.

If the recording layer thickness falls within the above preferable range, sufficient S/N ratios can be obtained even in the case of shift multiplexing (10-300 fold). If the recording layer thickness falls within the above more preferable range, the effect of increasing S/N ratios is more remarkable.

-Outer circumferential spacer-

The shape of the outer circumferential spacer is not particularly limited as long as it is substantially identical to the outer circumferential shape of optical recording medium, and can be appropriately selected depending on the intended purpose; examples thereof include quadrangle, circle, ellipse, and polygon. Among these, circle is preferable.

Examples of the cross-sectional shape of the outer circumferential spacer include quadrangle, rectangle, trapezoid, circle, and ellipse. Among these, quadrangle, trapezoid, and rectangle are preferable for achieving uniform thickness. The outer circumferential spacer 27 and inner circumferential spacer 28 shown in FIG. 19 are an example of a spacer with a quadrangular cross-sectional shape.

The thickness of the outer circumferential spacer is not particularly limited and can be appropriately set depending on the intended purpose. For example, the outer circumferential spacer preferably has substantially the same thickness as the recording layer, specifically, 100 μm to 1,000 μm.

The width of the outer circumferential spacer is not particularly limited as long as it is at least 0.5 mm and can be appropriately set depending on the intended purpose. For example, the width of the outer circumferential spacer is preferably 0.5 mm to 5 mm, more preferably 0.5 mm to 3 mm, most preferably 0.5 mm to 2 mm. If the width is less than 0.5 mm, a retaining function for making the thickness of the recording layer constant may be deteriorated due to a reduced mechanical strength or supporting area. If the width is more than 5 mm, holographic recording region is narrowed, and recording capacity may be impaired.

The material for the outer circumferential spacer is not particularly limited. Inorganic and organic materials can be suitably used.

Examples of the inorganic materials include glass, ceramic, quartz and silicon.

The organic materials are not particularly limited and can be appropriately selected depending on the intended purpose. Examples of the organic materials include acetate resins such as triacetylcellulose, polyester resins, polyethersulfone resins, polysulfone resins, polycarbonate resins, polyamide resins, polyimide resins, polyolefin resins, acrylic resins, polynorbornene resins, cellulose resins, polyarylate resins, polystyrene resins, polyvinylalcohol resins, polyvinyl chloride resins, polyvinylidene chloride resins, and polyacrylic resins. These may be used singly or in combination. Among these, polycarbonate resins and acrylic resins are preferable in light of their formability, peeling properties, and costs.

The manufacturing method for the spacer is not particularly limited and can be appropriately selected depending on the intended purpose; examples thereof include injection molding, blow molding, compression molding, vacuum molding, extrusion molding, and cutting machining.

-Inner circumferential spacer-

The shape of the inner circumferential spacer is not particularly limited as long it is substantially identical to the shape of the opening which the optical recording medium is provided with, and can be appropriately selected depending on the intended purpose; examples thereof include quadrangle, circle, ellipse, and polygon. Among these, circle is preferable.

Preferably, the cross-sectional shape of the inner circumferential spacer is the same as that of the outer circumferential spacer; examples thereof include quadrangle, rectangle, trapezoid, circle, and ellipse. Among these, quadrangle, trapezoid, and rectangle are preferable for achieving uniform thickness.

The thickness of the inner circumferential spacer is required to be the same as that of the outer circumferential spacer in view of the uniformity of the thickness of the recording layer.

The width of the inner circumferential spacer may be the same as or different from that of the outer circumferential spacer in view of function to retain the uniformity of the thickness of the recording layer and in order to ensure the recording region of the recording layer. The material for the inner circumferential spacer and the manufacturing method of the inner circumferential spacer may be different from or may be the same as those of the outer circumferential spacer.

<Filter layer forming step>

The filter layer forming step is a step in which the optical recording medium filter of the present invention is processed into the optical recording medium shape, and the processed filter is bonded to the second substrate to form a filter layer. The manufacturing method for the filter is as described above. Note, however, that it is possible to directly form the filter layer on the substrate depending on the circumstances. For example, a coating solution for coloring material-containing layer is applied onto the substrate to form a coloring material-containing layer, and a dielectric thin film is formed on the coloring material-containing layer by sputtering.

The shape of the optical recording medium is, for example, disc shape or card shape. The method for processing the filter into the optical recording medium shape is not particularly limited, and can be appropriately selected depending on the intended purpose. For example, a cutting process with a press cutter, or a stamping process with a stamping cutter can be used. The filter is bonded to the substrate by use of, for example, an adhesive or agglutinant while avoiding entry of air bubbles.

The adhesive is not particularly limited and can be appropriately selected depending on the intended purpose; examples thereof include UV curable adhesives, emulsion adhesives, one-component curable adhesives and two-component curable adhesives. These known adhesives can be used in any combination.

The agglutinant is not particularly limited and can be appropriately selected depending on the intended purpose; examples thereof include rubber agglutinants, acrylic agglutinants, silicone agglutinants, urethane agglutinants, vinylalkyl ether agglutinants, polyvinylalcohol agglutinants, polyvinylpyrrolidone agglutinants, polyacrylamide agglutinants and cellulose agglutinants.

The thickness of the adhesive or agglutinant applied is not particularly limited and can be appropriately set depending on the intended purpose. In the case of adhesive, the thickness is preferably 0.1 μm to 10 μm, more preferably 0.1 μm to 5 μm in light of the optical characteristics and slimness. In the case of agglutinant, the thickness is preferably 1 μm to 50 μm, more preferably 2 μm to 30 μm.

<First gap layer forming step>

The first gap layer forming step is a step in which a first gap layer is formed between the second substrate and the filter layer. The method for forming the first gap layer is not particularly limited and can be appropriately selected depending on the intended purpose. The first gap layer can be formed on the second substrate by, for example, spin coating, bonding a non-heat softening sheet, vapor deposition, or sputtering.

<Laminate forming step>

The laminate forming step is a step in which the first substrate is bonded to the second substrate over which the recording layer, filter layer and first gap layer have been formed through the recording layer disposing step, filter layer forming step, and first gap layer forming step, to form a laminate. Where necessary, the laminate forming step may include additional step(s) appropriately selected.

The method for bonding is not particularly limited and can be appropriately selected depending on the intended purpose. For example, the first substrate, second substrate, and optional additional layer(s) appropriately selected are bonded with an adhesive, pressure-bonded without using an adhesive, or bonded in vacuum.

The method for bonding with an adhesive is carried out as follows. Outer circumferences of the first substrate,

second substrate, and optional additional layer(s) appropriately selected are aligned, an adhesive is applied between adjacent layers and bonded at 23°C to 100°C with a pressure of 0.01 MPa to 0.5 MPa applied from the outside.
Bonding is preferably performed in vacuum in order to avoid generation of air bubbles during the bonding.

-Adhesive-

The adhesive is not particularly limited and can be appropriately selected depending on the intended purpose; examples thereof include acrylic adhesives, epoxy adhesives, and rubber adhesives. Among these, acrylic adhesives and epoxy adhesives are preferable in view of transparency, etc.
The method for pressure-bonding without using any adhesive can be carried out by allowing layers to adhere to each other by utilizing their adhesiveness, to form a laminate. Outer circumferences of the first substrate, second substrate, and optional additional layer(s) are aligned and bonded at 23°C to 100°C with a pressure of 0.01 MPa to 0.5 MPa given from the outside. Bonding is preferably performed in vacuum in order to avoid entry of air bubbles during the adhesion.

<Additional step>

The additional step is not particularly limited and can be appropriately selected depending on the intended purpose; examples thereof include a second gap layer forming step of forming a second gap layer between the recording layer and filter layer, and a side surface sealing step of sealing the entire side surface of the optical recording medium with an adhesive.

<Specific Example 1 of optical recording medium>

FIGS. 18 and 20 are schematic cross-sectional views showing the structure of an optical recording medium of the specific example 1 of the present invention. In the optical recording medium 21 according to this specific example 1 servo pit patterns 3 are formed on a second substrate 1 made of polycarbonate resin or glass, and the serve pit patterns 3 are coated with Al, Au, Pt or the like to form a reflective film 2. Although the servo pit patterns 3 are shown to be formed on the entire surface of the second substrate 1 in FIG. 20, it may be formed on the second substrate 1 periodically. In addition, the height of the servo pit patterns 3 are generally 1,750 angstrom (175 nm), far smaller than those of the other layers, including substrates.
A first gap layer 8 is formed by applying a material such as a UV curable resin over the reflective film 2 of the second substrate 1 by spin coating or the like. The first gap layer 8 protects the reflective film 2. At the same time, the first gap layer 8 is effective to adjust the size of holograms formed in the recording layer 4. Specifically, since somewhat large regions where optical interference between information and recording reference beams takes place need to be secured in the first recording layer 4, it is effective to provide a gap between the recording layer 4 and the servo pit patterns 3. A filter layer 6 is provided on the first gap layer 8, and a second gap layer 7 is provided between the filter layer 6 and recording layer 4. By sandwiching the second gap layer 7 and recording layer 4 with the filter layer 6 and first substrate 5 (polycarbonate resin substrate or glass substrate), an optical recording medium 21 is fabricated. There is a point at which information and reference beams focus; if this area is embedded in photopolymers, excessive exposure takes places and thus an excess amount of monomers are consumed, leading to poor multiplexing recording performance. To avoid this, it is effective to provide a transparent, inert second gap layer 7.
In FIG. 20, the filter layer 6 transmits therein only a red light beam and reflects light beams of the other colors. Thus, the information and reference beams for recording and reproduction do not pass through the filter layer 6 because they are green or blue light, and never reach the reflective film 2, becoming returning beams emitting from light entrance/exit surface A.
The filter layer 6 is constituted of three cholesteric liquid crystal layers 6a, 6b and 6c whose helical pitch is continuously changed in the thickness direction thereof. The filter layer 6 may be directly provided on the first gap layer 8 with a coating method, or may be provided by stamping a film in which a cholesteric liquid crystal layer is formed on a base material into the optical disc shape. With such three cholesteric liquid crystal layers in which the helical pitch is s continuously changed in the thickness direction, reflectivity of 90% or more can be realized in cases where $\lambda_0$ is 470 nm to 620 nm (where $\lambda_0$ is the wavelength of incident light) and where the light incident angle is 30°, and as shown in FIG. 22, light transmittance of 10% or less can be realized in cases where $\lambda_0$ is 470 nm to 620 nm (where $\lambda_0$ is the wavelength of incident light), reflecting light with a wavelength $\lambda_0$ of from 470 nm to 620 nm.
The optical recording medium 21 of specific example 1 may be a disc shape or card shape. There is no need to provide a servo pit pattern in a case where the optical recording medium 21 is a card shape. In the optical recording medium 21 the second substrate 1 is 0.6 mm in thickness, the first gap layer 8 is 100 μm in thickness, the filter layer 6 is 2 μm to 3 μm in thickness, the second gap layer 7 is 70 μm in thickness, the recording layer 4 is 0.6 mm in thickness,

and the first substrate 5 is 0.6 mm in thickness, bringing to the total to about 1.9 mm.

Next, optical operations around the optical recording medium 21 will be described with reference to FIG. 2. At first, a red light beam emitted from a servo laser source is reflected by a dichroic mirror 13 by almost 100%, and passes through an object lens 12. By this, the servo beam is applied onto the optical recording medium 21 in such a way that it focuses on the reflective film 2. More specifically, the dichroic mirror 13 is so configured that it admits only a green or blue light beam but reflects almost 100% of the red light beam. The servo beam incident from the light entrance/exit surface A of the optical recording medium 21 passes through the first substrate 5, recording layer 4, second gap layer 7, filter layer 6 and first gap layer 8, is reflected by the reflective film 2, and passes again through the first gap layer 8, filter layer 6, second gap layer 7, recording layer 4 and first substrate 5 to emit from the light entrance/exit surface A. The returning servo beam passes through the object lens 12 and is reflected by the dichroic mirror 13 by almost 100%, and then a servo information detector (not shown) detects servo information in the returning servo beam. The detected servo information is used for the focus servo operation, tracking servo operation, slide servo operation, and the like. The holographic material constituting the recording layer 4 is designed so as not to be sensitive to red light. For this reason, even when the servo beam has passed through the recording layer 4 or has been reflected diffusively by the reflective film 2, the recording layer 4 is not adversely affected. In addition, the returning servo beam that has been reflected by the reflective film 2 is reflected by the dichroic mirror 13 by almost 100%. Accordingly, the servo beam is not detected by a CMOS sensor or CCD 14 used for the detection of reconstructed images, and thus does not act as a noise component in the reproduction beam.

Both the information and recording reference beams generated in the recording/reproduction laser source pass through a polarizing plate 16 and are linearly polarized. The linearly polarized beams then pass through a half mirror 17 and are circularly polarized by a quarter wave plate 15. The circularly polarized beams then pass through the dichroic mirror 13 and the object lens 12, and are applied onto the optical recording media 21 in such a way that optical interference takes place between the information beam and recording reference beam to create interference images in the recording layer 4. The information and recording reference beams are incident from the light entrance/exit surface A and interact with each other in the recording layer 4 to form an interference image to be recorded there. Thereafter, the information and recording reference beams pass through the recording layer 4, launching into the filter layer 6. There, before reaching the bottom of the filter layer 6, the beams are reflected and become returning beams. More specifically, the information and recording reference beams do not reach the reflective film 2. This is because the filter layer 6 is formed of three cholesteric liquid crystal layers whose helical pitch is continuously changed in the thickness direction and thus admits only red light. Moreover, if the intensity of light that has undesirably passed through the filter layer 6 is suppressed to 20% or less of that of the incident light, there will be no practical problems even when such light reaches the bottom of the filter layer 6 and is reflected back as a returning beam, because this returning beams is again reflected by the filter layer 6 and its intensity in a reproduction beam is as small as 4% (20% x 20%) or less of that of the reproduction beam.

As described above, application of a reproduction beam, which is identical to a recording reference beam, to the recording layer having interference pattern recorded in the same direction as the reference beam leads to generation of a diffracted beam 39 from a hologram, or interference image, recorded as the interference pattern, and the diffracted beam 39 is detected by a detector 14. The image formed of the detected interference image is then decoded to reproduce recorded information.

<Specific Example 2 of optical recording medium>

FIG. 21 is a schematic cross sectional view of the structure of an optical recording medium in specific example 2. The optical recording medium 22 is identical to that of specific example 1 except for the structure of the filter layer 6.

In FIG. 21, the filter layer 6 transmits therein only a red light beam and reflects light beams of the other colors. Thus, the information and reference beams for recording and reproduction do not pass through the filter layer 6 because they are green or blue light, and never reach the reflective film 2, becoming returning beams emitting from light entrance/exit surface A.

This filter layer 6 is a laminate formed of a dielectric material-deposited layer consisting of 7 thin dielectric films with different refractive indices provided on a coloring material-containing layer. The filter layer 6 composed of the coloring material-containing layer and dielectric material-deposited layer may be directly formed on the first gap layer 8 by coating and vapor deposition, or may be provided by stamping a film, in which the coloring material-containing layer and dielectric material-deposited layer are formed on a base material, into an optical disc shape. With such a filter layer formed of the coloring material-containing layer and dielectric material-deposited layer, as shown in FIGS. 22 and 23, light transmittance of about 80% or more can be realized for light with a wavelength of 655 nm and reflectivity of about 90% or more can be obtained for light with a wavelength of 532 nm in cases where the light incident angle is $\pm 40°$, thereby enabling selective light reflection.

The optical recording medium 22 of specific example 2 may be a disc shape or card shape, and is fabricated in the same manner as in specific example 1.

Next, optical operations around the optical recording medium 22 fabricated in the same manner as the optical recording medium 21 will be described with reference to FIG. 2. In the optical recording medium 22, as in the case of the optical recording medium 21, a red light beam emitted from the servo laser source is reflected by the dichroic mirror 13 by almost 100%, and passes through the object lens 12. By this, the servo beam is applied onto the optical recording medium 22 in such a way that it focuses on the reflective film 2. More specifically, the dichroic mirror 13 is so configured that it transmits only a green or blue light beam but reflects almost 100% of the red light beam. The servo beam incident from the light entrance/exit surface A of the optical recording medium 22 passes through the first substrate 5, recording layer 4, second gap layer 7, filter layer 6 and first gap layer 8, is reflected by the reflective film 2, and passes again through the first gap layer 8, filter layer 6, second gap layer 7, recording layer 4 and first substrate 5 to emit from the light entrance/exit surface A. The returning servo beam passes through the object lens 12 and is reflected by the dichroic mirror 13 by almost 100%, and then the servo information detector (not shown) detects servo information in the returning servo beam. The detected servo information is used for the focus servo operation, tracking servo operation, slide servo operation, and the like. As in specific example 1, the holographic material constituting the recording layer 4 is designed so as not to be sensitive to red light. For this reason, even when the servo beam has passed through the recording layer 4 or has been reflected diffusively by the reflective film 2, the recording layer 4 is not adversely affected. In addition, the returning servo beam that has been reflected by the reflective film 2 is reflected by the dichroic mirror 13 by almost 100%. Accordingly, the servo beam is not detected by the CMOS sensor or CCD 14 used for the detection of reconstructed images, and thus does not act as a noise component in the reproduction beam.
Both the information and recording reference beams generated in the recording/reproduction laser source pass through the polarizing plate 16 and are linearly polarized. The linearly polarized beams then pass through the half mirror 17 and are circularly polarized by the quarter wave plate 15. The circularly polarized beams then pass through the dichroic mirror 13 and the object lens 12, and are applied onto the optical recording media 22 in such a way that optical interference takes place between the information beam and recording reference beam to create interference images in the recording layer 4. The information and recording reference beams are incident from the light entrance/exit surface A and interact with each other in the recording layer 4 to form an interference image to be recorded there. Thereafter, the information and recording reference beams pass through the recording layer 4, launching into the filter layer 6. There, before reaching the bottom of the filter layer 6, the beams are reflected and become returning beams. More specifically, the information and recording reference beams do not reach the reflective film 2. This is because the filter layer 6 is formed of the coloring material-containing layer and dielectric material-deposited film and thus transmits only red light. Moreover, if the intensity of light that has undesirably passed through the filter layer 6 is suppressed to 20% or less of that of the incident light, there will be no practical problems even when such light reaches the bottom of the filter layer 6 and is reflected back as a returning beam, because this returning beams is again reflected by the filter layer 6 and its intensity in a reproduction beam is as small as 4% (20% x 20%) or less of that of the reproduction beam. In specific example 2 the reproduced interference image of the diffracted beam 39 is corrected as in specific example 2, and therefore, excellent images can be reproduced on a constant basis.

EXAMPLES

Hereinafter, Examples of the present invention will be described, which however shall not be construed as limiting the scope of the present invention.

(Example 1)

<Preparation of optical recording medium>

An optical recording medium of Example 1 was prepared by depositing on a first substrate, in sequence, a recording layer, a second gap layer, a filter layer, a first gap layer, and a second substrate in a manner described below. The filter layer was prepared by depositing a film-shaped filter prepared as follows.

<Preparation of filter layer>

-Formation of coloring material-containing layer-

At first, polyvinyl alcohol (MP 203, from Kuraray Co., Ltd.) was applied on a polycarbonate film of 100 μm thickness (Iupilon, from Mitsubishi Gas Chemical Company Inc.) to a thickness of 1 μm to prepare a base film.
Next, coating solution for coloring material-containing layer containing the following components was prepared with a normal method.

- Red pigment (C. I. Pigment Red 9) ... 10 parts by mass
- Binder resin (polyvinyl alcohol resin, from Kuraray Co., Ltd.) ... 100 parts by mass
- Water ... 700 parts by mass

The coating solution for coloring material-containing layer was applied over the base film with a bar coater, and dried to form a coloring material-containing layer with a thickness of 3 μm.

-Simulations regarding thickness and reflection characteristics of dielectric material-deposited layer-

Simulations were conducted for the thickness and reflection characteristics of the dielectric material-deposited layer under the following calculation conditions using optical thin-film calculation software (bland name: TFCalC, available from Software Spectra Inc.).

<Calculation conditions>

- For refractive indices of $TiO_2$ and $SiO_2$, values stored in TFCalc database were used
- Thickness was optimized so that both the reflectivity at 532 nm and reflectivity at 650 nm increase
- Refractive index of medium was set to 1.52
- The wavelengths of reference and information beams were set to 532 nm (for recording), and the wavelength of servo beam was set to 650 nm (for tracking)

<9-layer laminate>

Nine thin dielectric films shown in Table 1 were laminated.

Table 1

| | Material | Thickness (nm) |
|---|---|---|
| Ninth layer from light incident side | $TiO_2$ | 55.5 |
| Eigth layer from light incident side | $SiO_2$ | 91.3 |
| Seventh layer from light incident side | $TiO_2$ | 55.5 |
| Sixth layer from light incident side | $SiO_2$ | 91.3 |
| Fifth layer from light incident side | $TiO_2$ | 55.5 |
| Fourth layer from light incident side | $SiO_2$ | 91.3 |
| Third layer from light incident side | $TiO_2$ | 55.5 |
| Second layer from light incident side | $SiO_2$ | 91.3 |
| First layer from light incident side | $TiO_2$ | 55.5 |

The results of the above simulation on the thin dielectric films were as follows: Even in the case of the 9-layer laminate of thin dielectric layers, the reflectivity for light with a wavelength of 535 nm was 96.9% at an incident angle of 0°, and the reflectivity for light with a wavelength of 650 nm was 91.6% at an incident angle of 0°. Thus, practical reflectivity characteristics were obtained.

-Formation of dielectric material-deposited filter-

At first, a base film was prepared by applying on a 100 μm-thick triacetyl cellulose film ("FUJITAC 12/3, from Fuji Photo Film Co., Ltd.) dipentaerythritol hexaacrylate (from Nippon Kayaku Co., Ltd.) to a thickness of 0.5 μm.

Subsequently, a dielectric material-deposited filter was prepared by deposition of 9 thin dielectric films on the base film by sputtering on a multi-chamber (Cube, from Unaxis) in a manner similar to that for the above simulation for the 9-layer laminate.

With an adhesive, the dielectric material-deposited filter was then bonded to the base film provided with the coloring material-containing layer, to prepare an optical recording medium filter.

The optical recording medium filter was evaluated for its reflectivity characteristics with a spectro-reflectance meter (optical source: L-5662, from Hamamatsu Photonics K.K., photo multi-channel analyzer: PMA-11, from Hamamatsu Photonics K.K.).

It was demonstrated that the optical recording medium filter of Example 1 could reflect 30% or more of light with a wavelength of 532 nm, which is the selective reflection wavelength for the light, at an incident angle of ±40°.

Next, the resultant optical recording medium filter was stamped into a disc shape of predetermined size, so that the filter could be placed on the substrate.

-First substrate-

For the first substrate, a polycarbonate resin substrate of 120 mm in diameter and 0.6 mm in thickness was employed, the surface of which is smooth and free from any concavo-convex pattern such as a servo pit pattern.

-Second substrate-

For the second substrate, a polycarbonate resin substrate prepared by injection molding and having a diameter of 120 mm and thickness of 1.2 mm was employed. A servo pit pattern is formed all over the surface of the substrate, with the track pitch being 1.5 μm, groove depth being 100 nm, and pit length being 1 μm.

A reflective film was then deposited on the surface of the servo pit pattern of the second substrate such that it reflects 90% of light with a wavelength of 532 nm that is vertically incident. For the reflective film material, aluminum (Al) was employed. The Al reflective film was deposited to a thickness of 50 nm by DC magnetron sputtering.

-Outer circumferential spacer

The outer circumferential spacer has a 120 mm-diameter circular shape that is identical to the outer shapes of the first and second substrates and has a surface direction width of 0.5 mm±100 μm and thickness of 600 μm, which is the same thickness as that of the recording layer 4. Thus, the cross-sectional shape is quadrangle with a dimension of 0.5 mm × 600 μm.

The outer circumferential spacer was prepared by injection molding of polycarbonate with excellent formability and mechanical strength using a injection molding machine (from Sumitomo Heavy Industries, Ltd.).

-Inner circumferential spacer-

As shown in FIG. 19, the inner circumferential spacer has a 15 mm-diameter circular shape that is identical to the outer shapes of the openings of openings of the first substrate 5 and second substrate 1 and has a surface direction width of 0.5 mm±100 μm and thickness of 600 μm, which is the same thickness as that of the recording layer 4. Thus, the cross-sectional shape is quadrangle with a dimension of 0.5 mm × 600 μm, which is the same as that of the outer circumferential spacer.

The inner circumferential spacer was prepared by injection molding of polycarbonate with excellent formability and mechanical strength, which is the same as that for the outer circumferential spacer, using a injection molding machine (from Sumitomo Heavy Industries, Ltd.).

-Formation of laminate-

An adhesive (SD-640, from Dainippon Ink and Chemicals Inc.) was applied over the second substrate 1 by spin coating to a thickness of 0.1 mm, the second substrate being provided with a first gap layer 8 formed by applying thereon an adhesive (SD-640, from Dainippon Ink and Chemicals Inc.), and as shown n FIG. 19, the filter was deposited on the second substrate 1 while avoiding entry of air bubbles, to form a filter layer 6.

A first gap layer 7 formed of a 500 μm-thick transparent polyethylene terephthalate sheet was bonded to the filter layer 6 with a laminator (model name: HAL 110aa, from Sankyo Co., Ltd.) under the following condition: pressure-roller temperature = 23°C, pressure-roller pressure = 0.1 MPa, bonding speed = 1.0 m/min.

Furthermore, the resulting outer circumferential spacer 27 was bonded to the surface of the second gap layer 7 with the edge of the outer circumferential spacer 27 being matched to the edge the second substrate 1, and further the inner circumferential spacer 28 was bonded to the surface of the second gap layer 7 with the center of the inner circumferential spacer 28 being matched to that of the second substrate 1. A UV adhesive (SD-640, from Dainippon Ink and Chemicals Inc.) was used as the adhesive and cured by irradiation with UV.

With a syringe, the resulting coating solution for optical recording layer composition was injected into a 600 μm-thick space formed by the outer circumferential spacer 27 and inner circumferential spacer 28. The condition used

for the injection was as follows: temperature = 23°C, liquid viscosity = 300 mPa·s, and humidity = 50%. After injection the optical recording layer composition was cured at 80°C for 40 minutes to thereby form the recording layer 4 which had thickness of of 600 μm.

An adhesive (GM-9002, from Blenny Giken Ltd.) was deposited on the recording layer 4, and the edges of the first and second substrates were pressurized at a pressure of 0.08 MPa at 80°C for 40 minutes to form a laminate, and finally, the edge of the laminate was sealed with a moisture curable adhesive and left to stand at 45°C for 24 hours. In this way an optical recording medium similar to the optical recording medium 22 shown in FIG. 21 was prepared.

<Setting of temperature sensor>

As shown FIGS. 9 and 10, an infrared temperature sensor 44 was employed as the above temperature sensor, and placed 10 mm away from the back surface of the optical recording medium 21 in such a way that the angle θ1 formed by a line L1 and line L2 is about 135°, the line L1 passing through the center of the pickup 43 for applying information and reference beams and the center of the optical recording medium 21, the line L2 passing through the center of the temperature sensor 44 and the center of the optical recording medium 21.

-Use-allowable temperature range and use-limit temperature range of optical recording medium-

The reference temperature of the optical recording medium was set to 30°C, the use-limit temperature range, outside of which warning and aborting of recording or reproduction are effected, was set to ±10°C from the reference temperature, and the use-allowable temperature range, outside of which display of warning is effected, was set to ±5°C from the reference temperature.

<Recording on or reproduction from optical recording medium>

As information, a series of multiplexed holograms (13 × 13: 49-fold multiplexing) was written into the recording layer of the resultant optical recording medium in the form of interference images by application of information and reference beams, with their spot size being 200 μm in diameter at the focus point in the holograms to be recorded, by use of an optical recording/reproducing apparatus including a warning unit configured to inform that the surface temperature of the optical recording medium has fallen outside a use-allowable temperature range with respect to a reference temperature and an aborting unit configured to display the fact that at least one of recording and reproduction will be aborted and abort recording and reproduction, when the surface temperature has fallen outside the use-limit temperature range with respect to the reference temperature, and a collinear hologram recording and reproducing tester SHOT-1000 (from Pulstec Industrial Co., Ltd.).

A reproduction beam identical to the reference beam was applied to the written optical recording medium 21 from the same direction as the reference beam, producing a diffracted beam 39 from the recorded interference image. The diffracted beam 39 was detected by the detector 14 for decoding of the recorded image.

In the optical recording/reproducing apparatus, the use-allowable temperature range was set to ±5°C, and the use-limit temperature range was set to ±10°C.

When the surface temperature, upon recording, of the optical recording medium fell outside a temperature range of 25°C to 35°C (i.e., the use-allowable temperature range with respect to the reference temperature of ±5°C), the warning unit effected warning. The recording operation was continued, and the error count, as measured upon proper reproduction of the recorded information, was 30 per frame.

This error count was 10 per frame when the recording was carried out in normal state, i.e., within the use-allowable temperature range.

When the surface temperature, upon reproduction, of the properly written optical recording medium fell outside a temperature range of 25°C to 35°C (i.e., the use-allowable temperature range with respect to the reference temperature of ±5°C), the warning unit effected warning. The reproduction operation was continued, and the error count was 30 per frame.

This error count was 10 per frame when the reproduction was carried out in normal state, i.e., within the use-allowable temperature range.

When the surface temperature of the optical recording medium fell outside a temperature range of 20°C to 40°C (i.e., the use-limit temperature range with respect to the reference temperature of ±10°C), the aborting unit displays warning and aborts recording. Similarly, reproduction was aborted.

Industrial Applicability

The optical recording/reproducing apparatus of the present invention warns if it is determined that the surface

temperature of an optical recording medium on or from which information is recorded or reproduced has fallen outside a predetermined temperature range, and aborts recording or reproduction; therefore, The optical recording/reproducing apparatus of the present invention is capable of recording or reproduction under proper temperature conditions and of obtaining high-precision recording and reproduced images, recording and reproduction with high SNRs, and can be suitably used for high-density recording media. Moreover, the optical recording/reproducing apparatus of the present invention can be used for plane holograms, which are relatively thin holograms for recording of two-dimensional image information, volumetric holograms for recording of much information such as information of stereoimages, transmissive holograms, and reflective holograms. The optical recording/reproducing apparatus of the present invention can be widely used as a method of reproducing information from various holograms, including amplitude holograms, phase holograms, blazed holograms, and complex amplitude holograms. More specifically, the optical recording/reproducing apparatus of the present invention can be used for CD, DVD, BD, HD, magnetic tapes, computer backup tapes, broadcasting tapes, etc.

**Claims**

**1.** An optical recording/reproducing apparatus for performing at least one of recording by application of an information beam and a reference beam to an optical recording medium having a recording layer for recording information by holography, and reproduction of information by application of a reproduction beam, the apparatus comprising at least one of:

a warning unit configured to inform that, upon recording or reproduction, a surface temperature of the optical recording medium has fallen outside a use-allowable temperature range with respect to a reference temperature; and
an aborting unit configured to display the fact that at least one of recording and reproduction will be aborted and abort the recording and reproduction, when the surface temperature has fallen outside a use-limit temperature range with respect to the reference temperature.

**2.** The optical recording/reproducing apparatus according to claim 1, wherein the reference temperature is 0°C to 50°C.

**3.** The optical recording/reproducing apparatus according to one of claims 1 and 2, wherein the use-allowable temperature range is -30°C to 30°C.

**4.** The optical recording/reproducing apparatus according to any one of claims 1 to 3, wherein the use-limit temperature range is -40°C to 40°C.

**5.** The optical recording/reproducing apparatus according to any one of claims 1 to 4, wherein the surface temperature is a temperature of a surface of the information beam, reference beam, and reproduction beam, and the surface temperature is measured with a temperature sensor.

**6.** The optical recording/reproducing apparatus according to any one of claims 1 to 5, wherein the optical recording medium has a disc shape, angle θ1 formed by a line L1 and line L2 is 10° to 180°, the line L1 passing through the center of a pickup for applying information and reference beams and the center of the optical recording medium, the line L2 passing through the center of the temperature sensor and the center of the optical recording medium, and the temperature sensor is placed inside the edge of the optical recording medium without being in contact with the surface of the optical recording medium.

**7.** The optical recording/reproducing apparatus according to any one of claims 1 to 6, wherein the optical recording medium has a disc shape, and the difference between a distance d1 from the center of a pickup for applying information and reference beams to the center of the optical recording medium and a distance d2 from the center of the temperature sensor to the center of the optical recording medium is 20 mm or less.

**8.** The optical recording/reproducing apparatus according to any one of claims 1 to 7, wherein the information beam and reference beam are applied in such a way that the optical axis of the information beam is collinear with the optical axis of the reference beam.

**9.** The optical recording/reproducing apparatus according to any one of claims 1 to 8, wherein the reproduction beam is applied to an interference image at the same angle as the reference beam used for recording on the optical recording medium, to reproduce recorded information.

**10.** The optical recording/reproducing apparatus according to any one of claims 1 to 9, wherein the optical recording medium includes, in sequence, a first substrate, the recording layer, a filter layer, and a second substrate.

**11.** The optical recording/reproducing apparatus according to any one of claims 1 to 10, wherein the optical recording medium records therein a reflective hologram.

**12.** An optical recording method which records on an optical recording medium having a recording layer for recording by holography by application of an information beam and a reference beam, the method comprising at least one of:

warning that, upon recording, a surface temperature of the optical recording medium has fallen outside a use-allowable temperature range with respect to a reference temperature; and
displaying the fact that recording will be aborted and aborting the recording, when the surface temperature has fallen outside a use-limit temperature range with respect to the reference temperature.

**13.** The optical recording method according to claim 12, wherein the reference temperature is 0°C to 50°C.

**14.** The optical recording method according to one of claims 12 and 13, wherein the use-allowable temperature range is -30°C to 30°C.

**15.** The optical recording method according to any one of claims 12 to 14, wherein the use-limit temperature range is -40°C to 40°C.

**16.** An optical reproducing method which reproduce from an optical recording medium having a recording layer for recording by holography by application of a reproduction beam, the method comprising at least one of:

warning that, upon reproduction, a surface temperature of the optical recording medium has fallen outside a use-allowable temperature range with respect to a reference temperature; and
displaying the fact that reproduction will be aborted and aborting the reproduction, when the surface temperature has fallen outside a use-limit temperature range with respect to the reference temperature.

**17.** The optical recording method according to claim 16, wherein the reference temperature is 0°C to 50°C.

**18.** The optical recording method according to one of claims 16 and 17, wherein the use-allowable temperature range is -30°C to 30°C.

**19.** The optical recording method according to any one of claims 16 to 18, wherein the use-limit temperature range is -40°C to 40°C.

FIG. 1

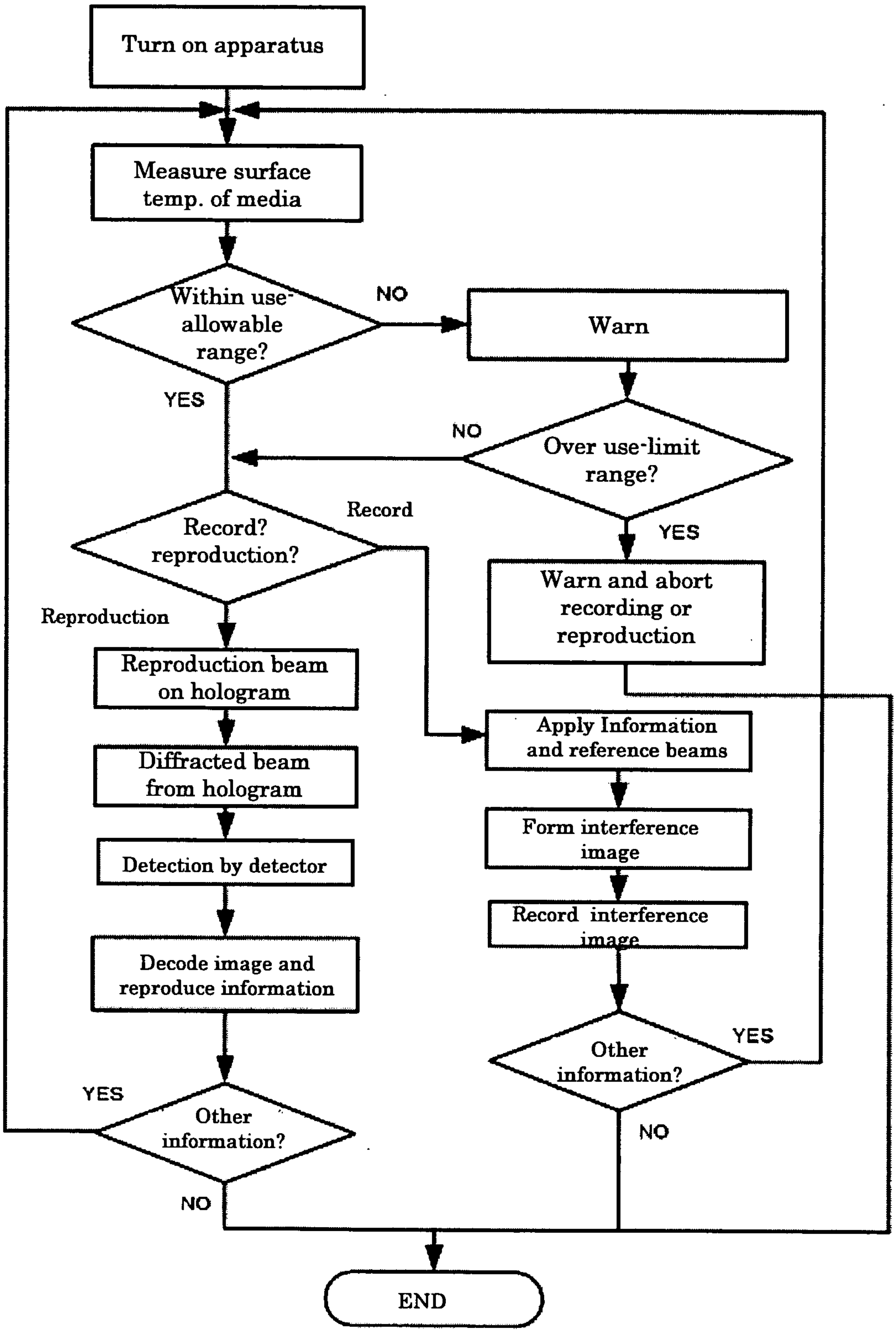

Turn on apparatus
Measure surface temp. of media
Within use-allowable range?
NO
Warn
YES
NO
Over use-limit range?
Record
Record? reproduction?
YES
Warn and abort recording or reproduction
Reproduction
Reproduction beam on hologram
Apply Information and reference beams
Diffracted beam from hologram
Form interference image
Detection by detector
Record interference image
Decode image and reproduce information
YES
Other information?
YES
Other information?
NO
NO
END

FIG. 2

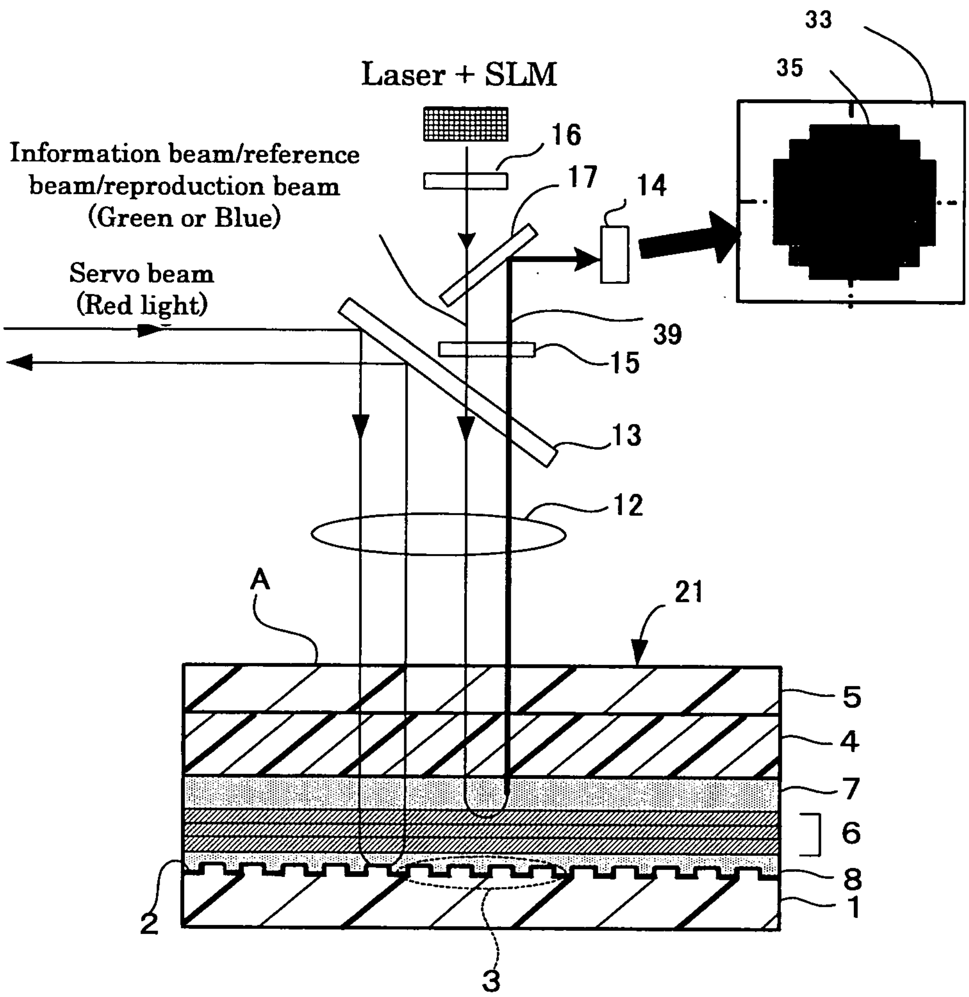
Laser + SLM
Information beam/reference beam/reproduction beam (Green or Blue)
Servo beam (Red light)
33
35
16
17
14
39
15
13
12
A
21
5
4
7
6
8
1
2
3

FIG. 3

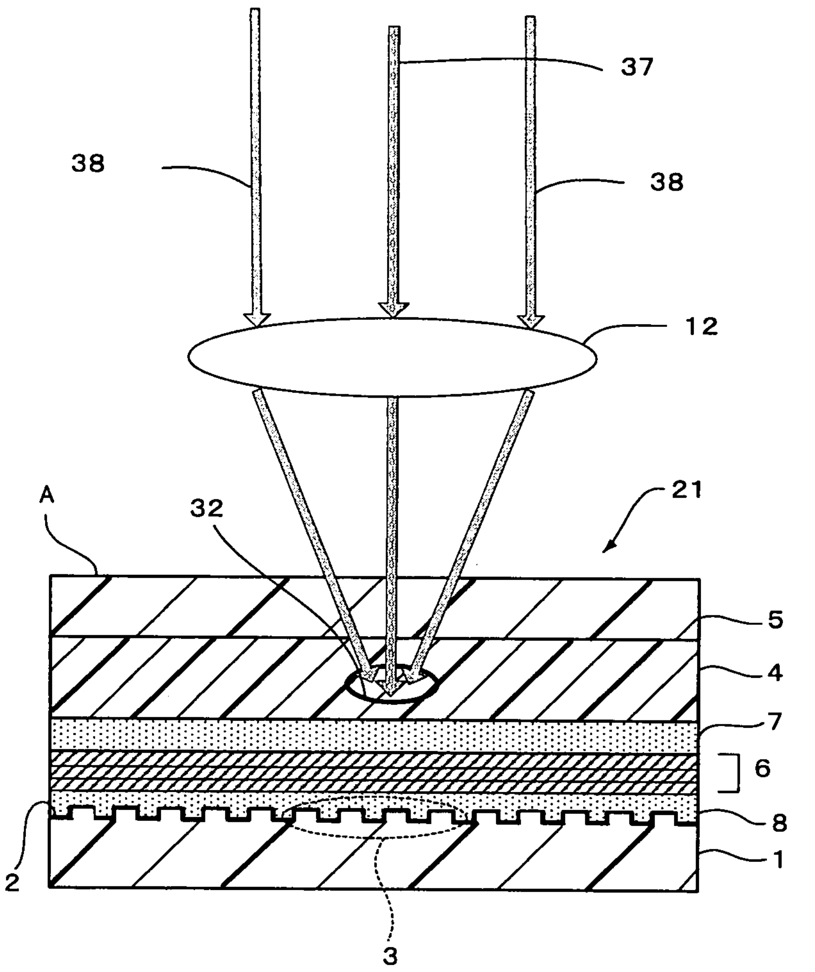

FIG. 4

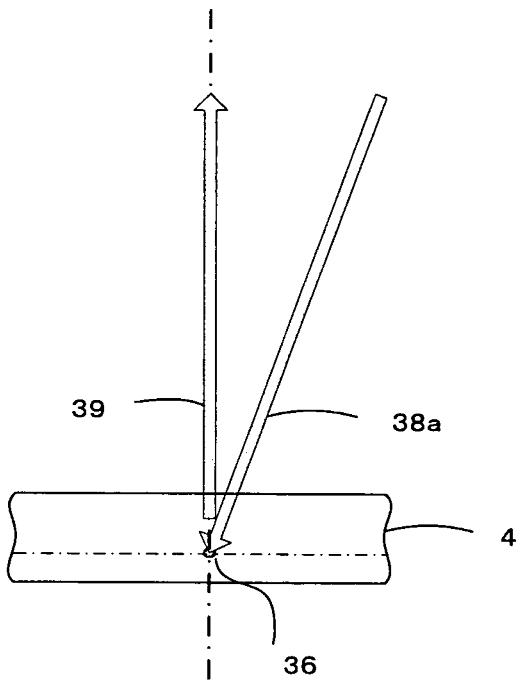


FIG. 5

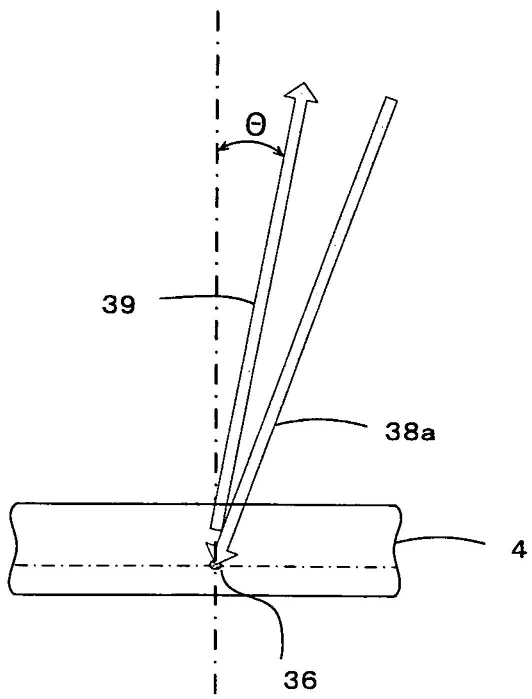

FIG. 6

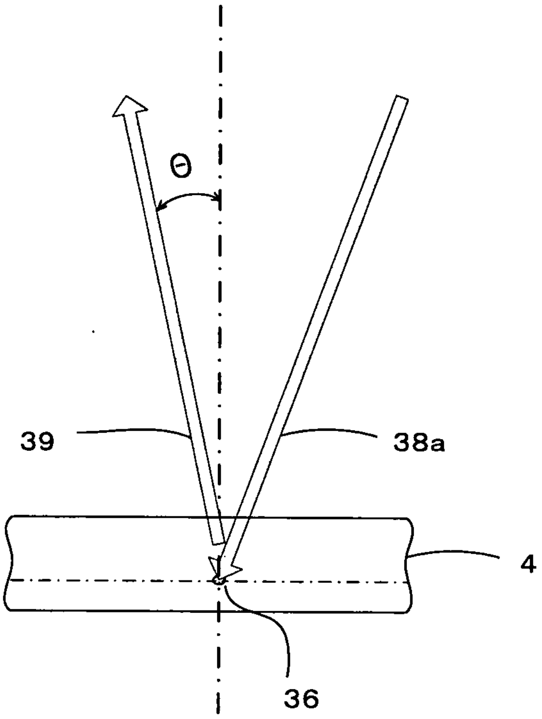


FIG. 7

ABNORMAL
SURFACE
TEMPERATURE

ABNORMAL
SURFACE
TEMPERATURE,
REPRODUCTION
WILL BE ABORTED

FIG. 8

ABNORMAL
SURFACE
TEMPERATURE

ABNORMAL
SURFACE
TEMPERATURE,
RECORDING WILL
BE ABORTED

FIG. 9

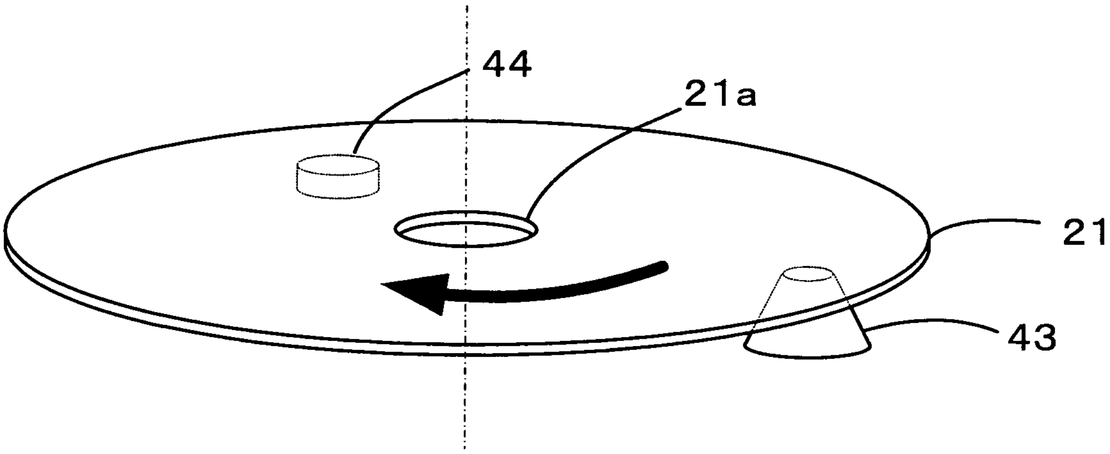

FIG. 10

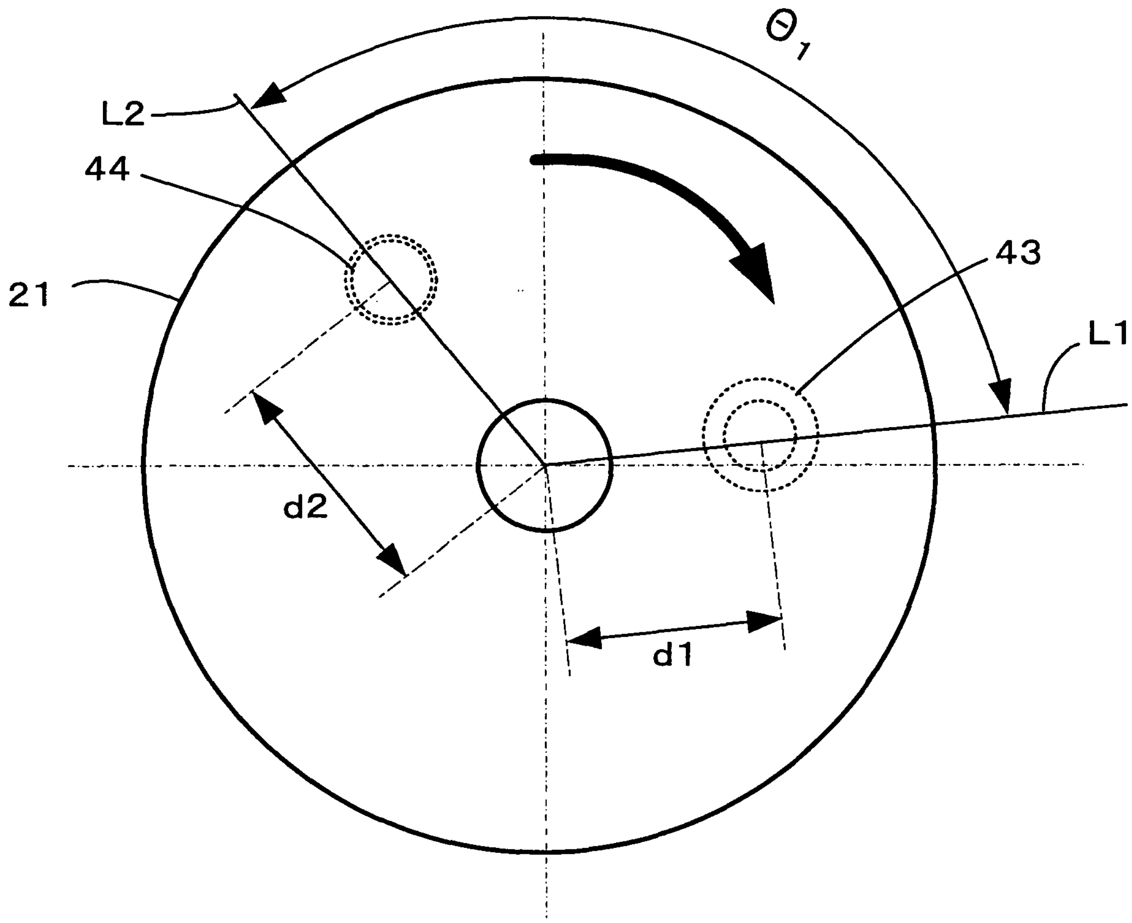

FIG. 11

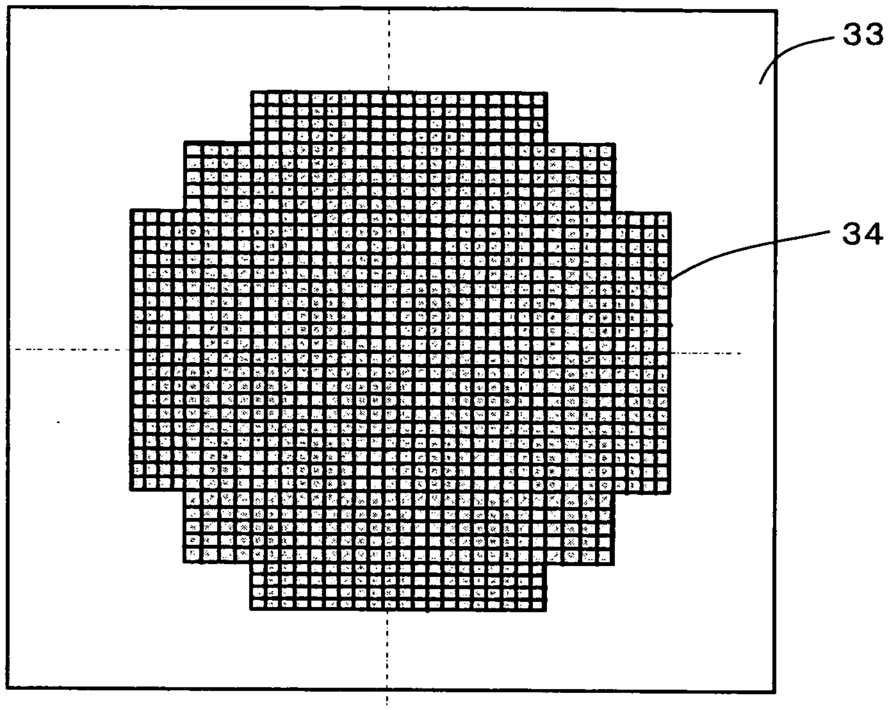


FIG. 12

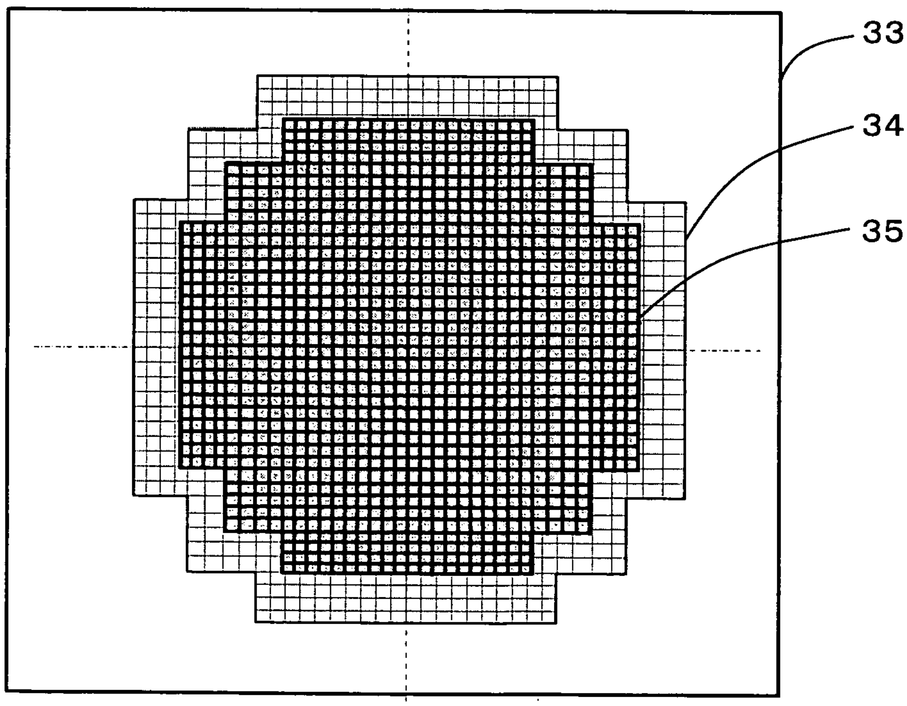

FIG. 13

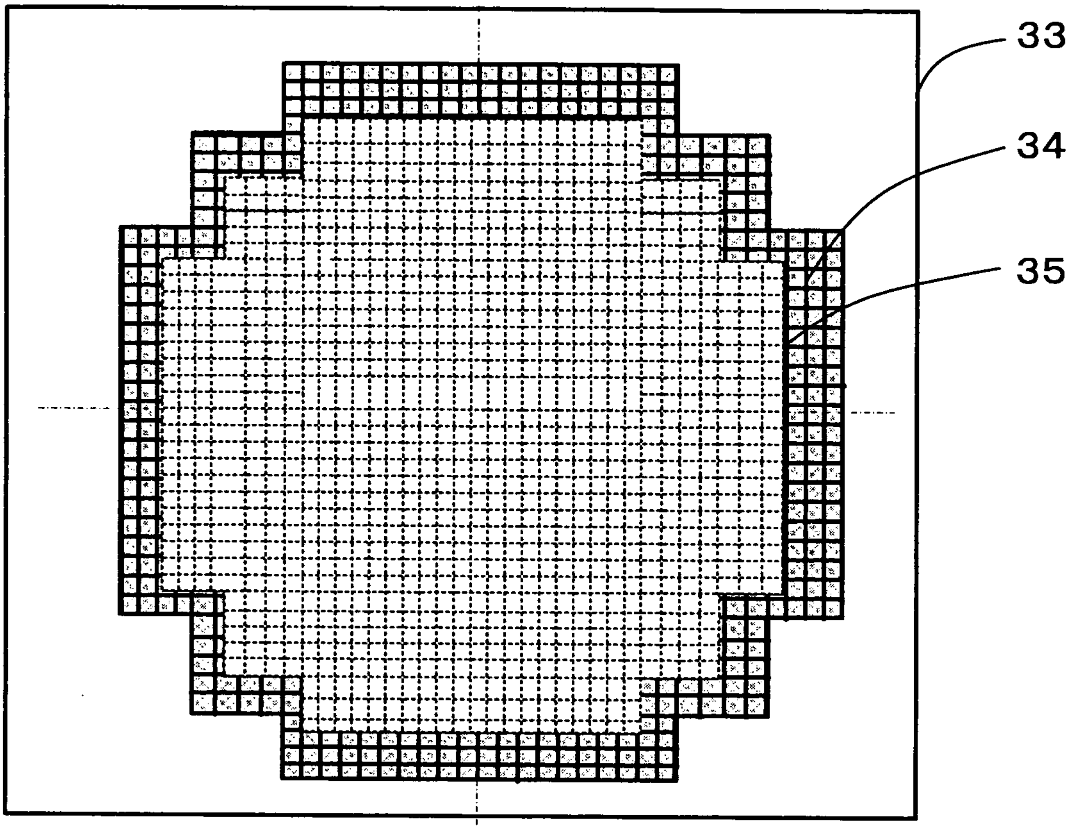

FIG. 14

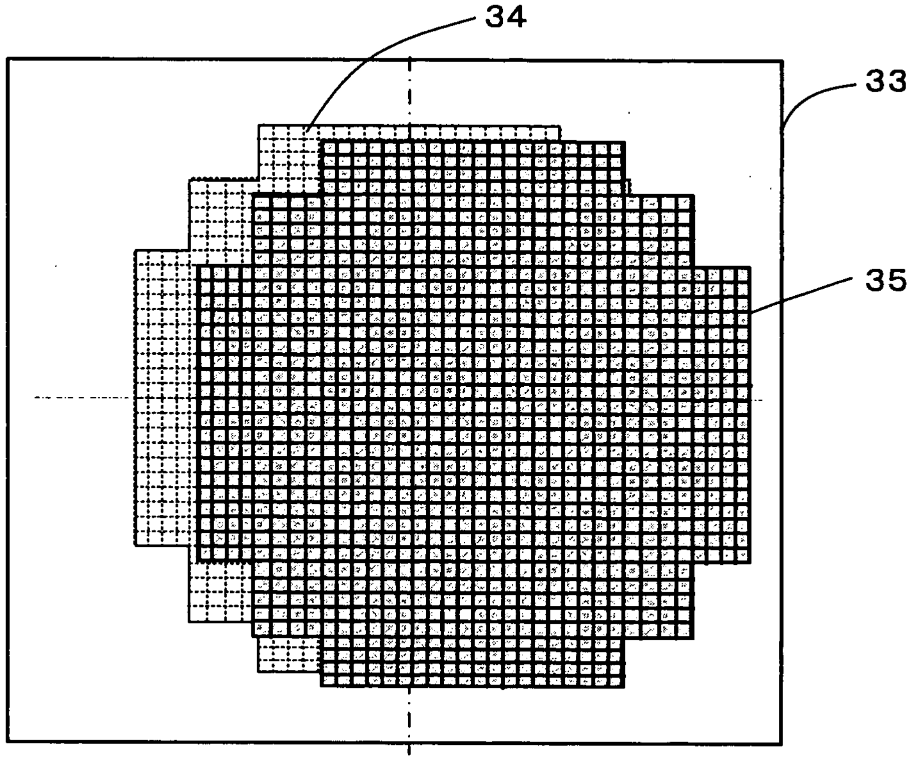

FIG. 15

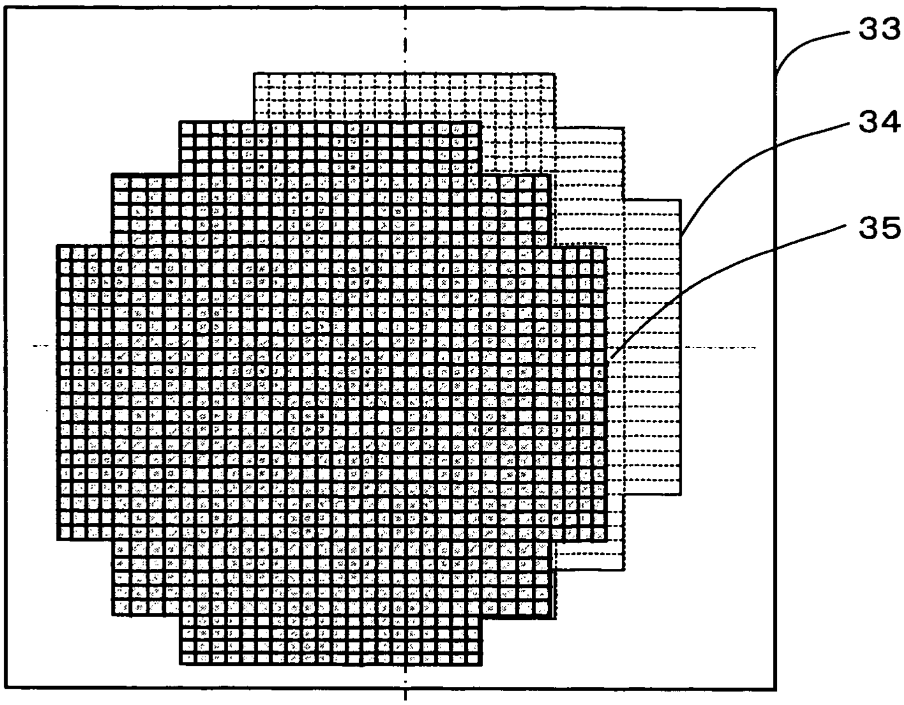


FIG. 16

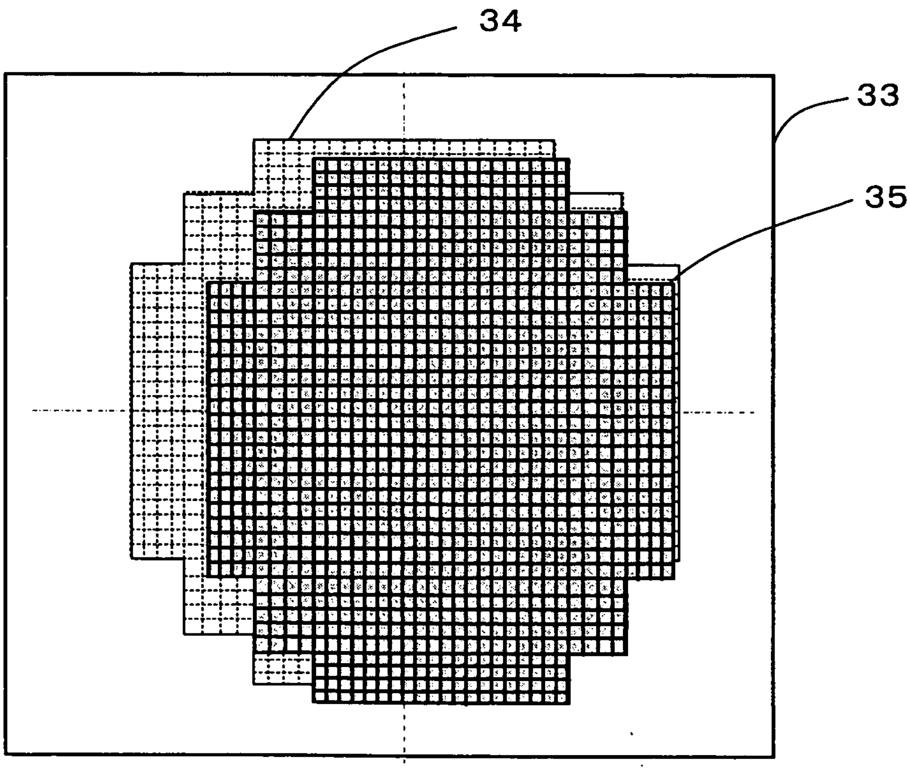

FIG. 17

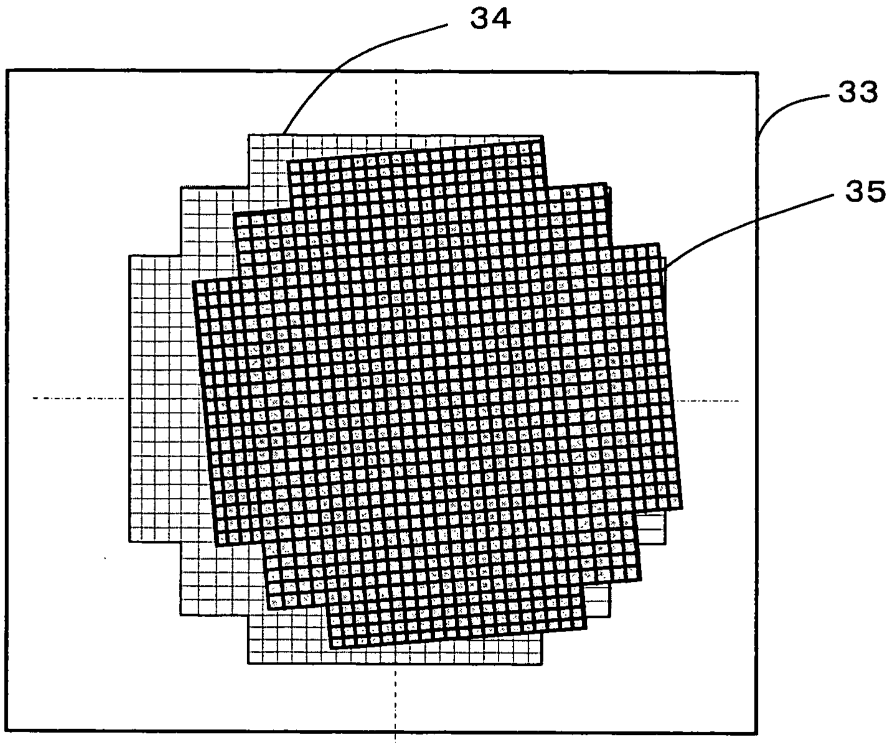


FIG. 18

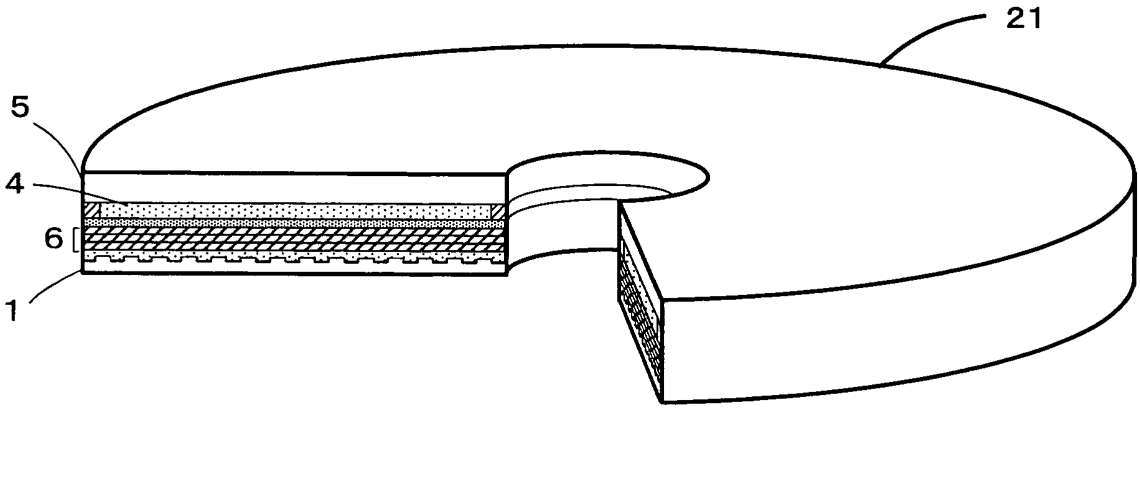

FIG. 19

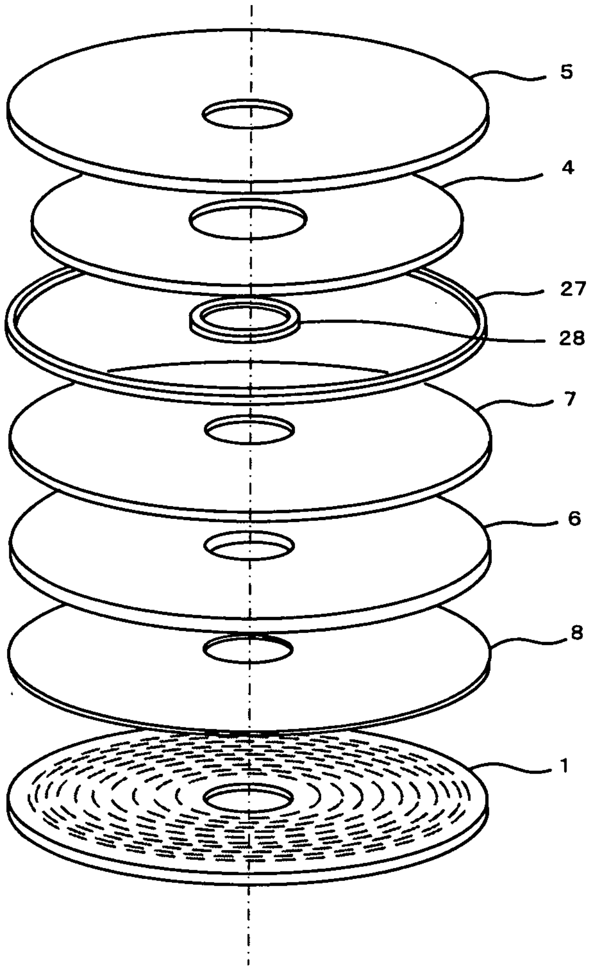

FIG. 20

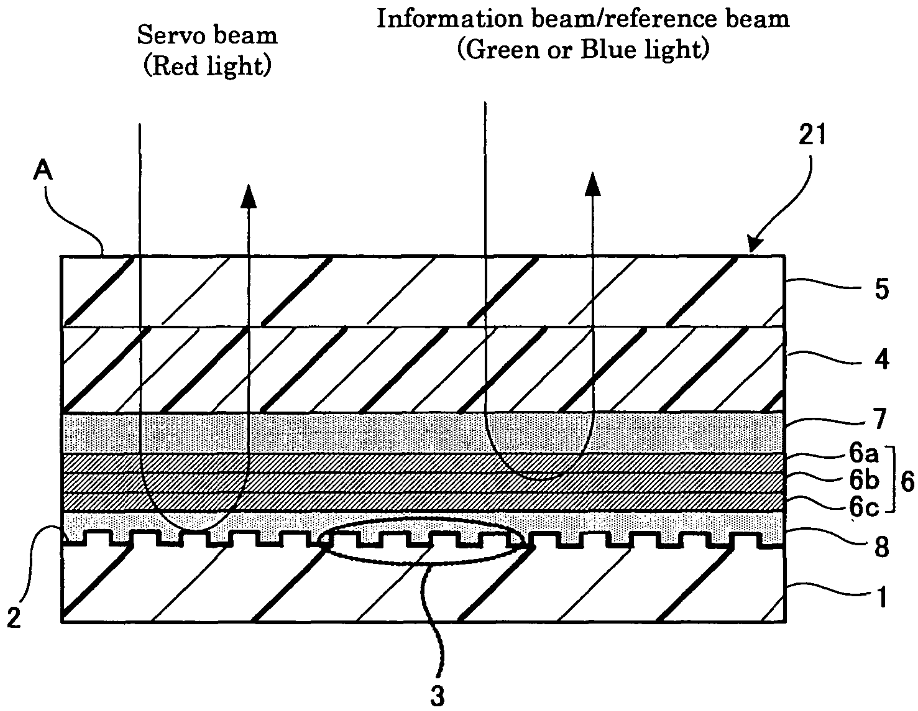
Servo beam
(Red light)
Information beam/reference beam
(Green or Blue light)
21
A
5
4
7
6a
6b
6c
6
8
1
2
3

FIG. 21

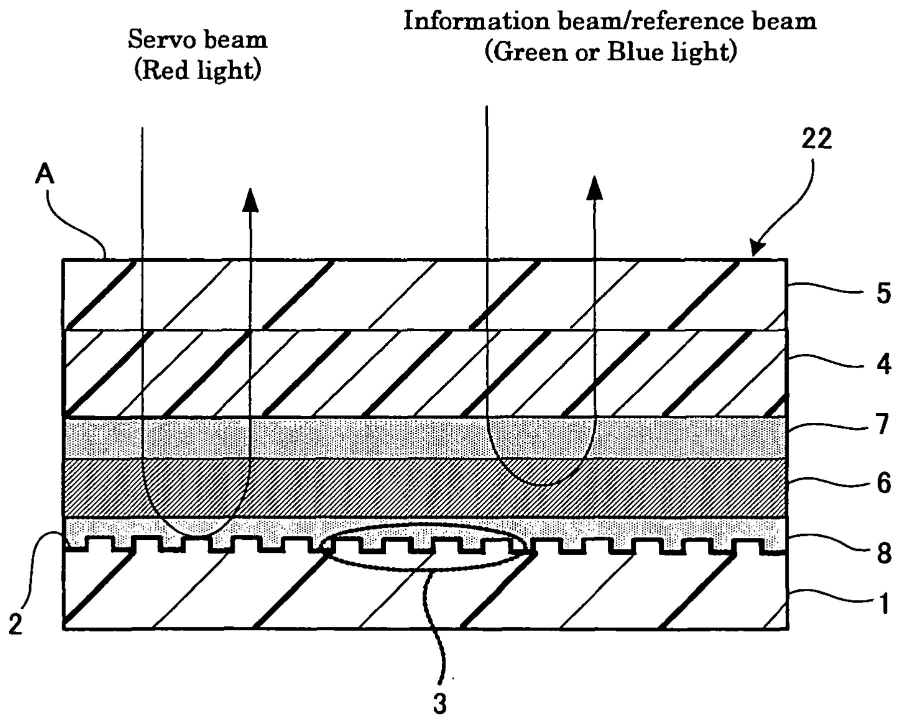
Servo beam
(Red light)
Information beam/reference beam
(Green or Blue light)
22
A
5
4
7
6
8
1
2
3

FIG. 22

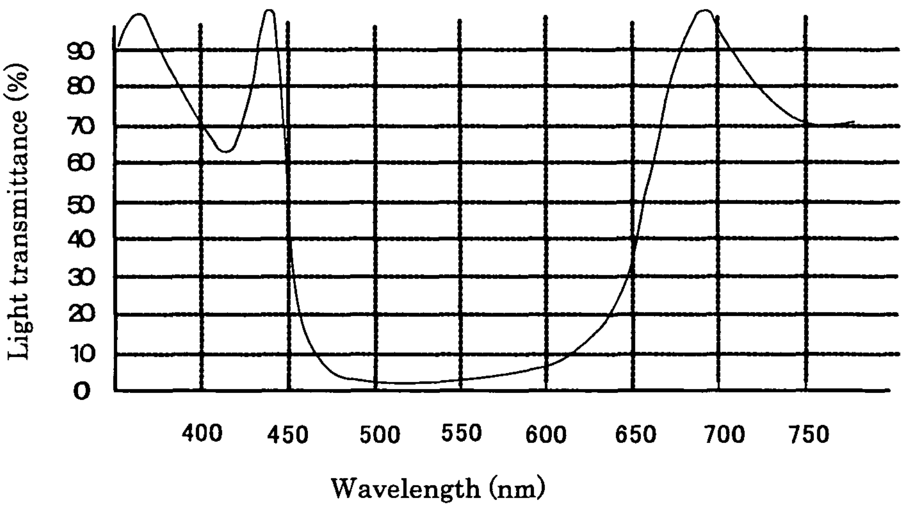

Light transmittance (%)
90
80
70
60
50
40
30
20
10
0
400
450
500
550
600
650
700
750
Wavelength (nm)


FIG. 23

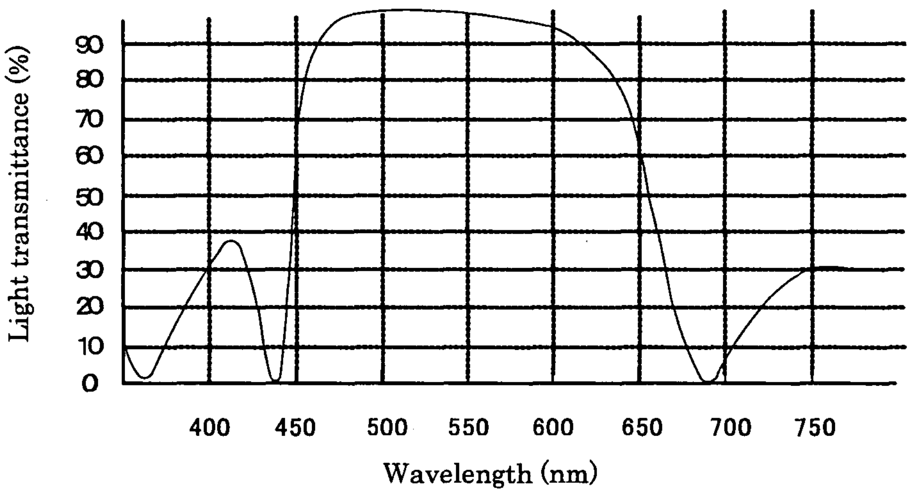

Light transmittance (%)
90
80
70
60
50
40
30
20
10
0
400
450
500
550
600
650
700
750
Wavelength (nm)

FIG. 24

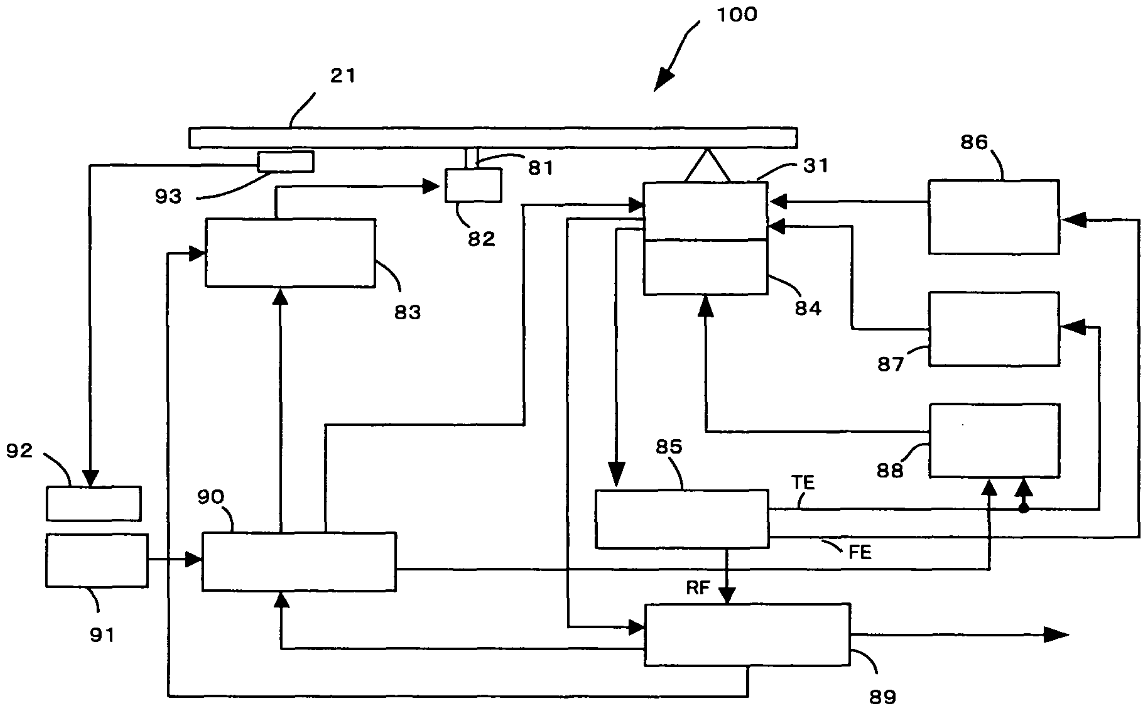


FIG. 25

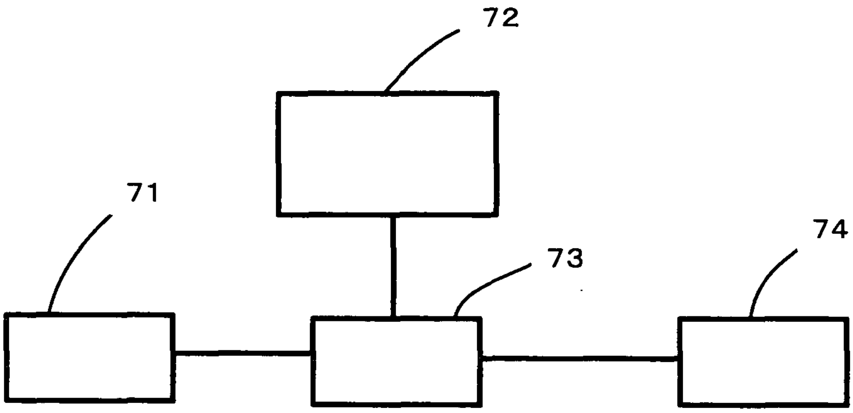

## INTERNATIONAL SEARCH REPORT

International application No.
PCT/JP2007/051805

A. CLASSIFICATION OF SUBJECT MATTER
*G11B7/0065*(2006.01)i, *G03H1/26*(2006.01)i, *G11B7/004*(2006.01)i, *G11B7/135*(2006.01)i

According to International Patent Classification (IPC) or to both national classification and IPC

B. FIELDS SEARCHED

Minimum documentation searched (classification system followed by classification symbols)
G11B7/0065, G03H1/26, G11B7/004, G11B7/135

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-177958 A (InPhase Technologies, Inc.), 24 June, 2004 (24.06.04), Full text; all drawings & EP 1422698 A2 | 1-19 |
| A | JP 2005-190567 A (Sony Corp.), 14 July, 2005 (14.07.05), Claim 1; Par. Nos. [0140] to [0142]; Fig. 16 (Family: none) | 1-19 |
| A | JP 2005-44448 A (Fuji Photo Film Co., Ltd.), 17 February, 2005 (17.02.05), Claims (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 April, 2007 (04.04.07) | Date of mailing of the international search report<br>17 April, 2007 (17.04.07) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2007/051805

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-329322 A (Sanyo Electric Co., Ltd.), 15 November, 2002 (15.11.02), Full text; all drawings (Family: none) | 1-19 |
| A | JP 2000-105975 A (Sanyo Electric Co., Ltd.), 11 April, 2000 (11.04.00), Full text; all drawings (Family: none) | 1-19 |
| A | JP 2005-216343 A (Xanavi Informatics Corp.), 11 August, 2005 (11.08.05), Claims (Family: none) | 1-19 |
| A | JP 10-134375 A (Victor Company Of Japan, Ltd.), 22 May, 1998 (22.05.98), Full text; all drawings (Family: none) | 1-19 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004177958 A
- US 5759721 A
- US 4942112 A
- US 4959284 A
- US 6221536 B
- US 6743552 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A
- JP 2004352081 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A


### Non-patent literature cited in the description


- *Nikkei Electronics,* 17 January 2005, 105-114
- **HIRATARO NAKAJIMA ; HIROSHI OGAWA.** Illustrative Compact Disc Handbook. Ohmsha Publishing, 10 November 1986
- Photopolymer Handbook. Kogyo Chosakai Publishing Inc, 1989
- Photopolymer Technology. THE NIKKAN KOGYO SHIMBUN LTD, 1989
- *SPIE Journals and Proceedings,* 1997, vol. 3010, 354-372
- *SPIE Journals and proceedings,* 1998, vol. 3291, 89-103